# FASCICULE DE BREVET EUROPEEN

(11) **EP 1 701 273 B1**
(45) Date de publication et mention de la délivrance du brevet: **13.02.2008**
(21) Numéro de dépôt: 06110717.3
(22) Date de dépôt: 06.03.2006
(51) Int. Cl.: G06F 15/00

(54) **Architecture de communication globalement asynchrone pour système sur circuit intégré**
Global asynchrone Kommunikationsarchitektur für ein System auf einem integrierten Schaltkreis
Globally asynchronous communication architecture for on-chip system

(30) Priorité: 08.03.2005 FR 0550610
(43) Date de publication de la demande: 13.09.2006
(73) Titulaire: COMMISSARIAT A L'ENERGIE ATOMIQUE, 75015 Paris (FR)
(72) Inventeur: Clermidy, Fabien, 38120, SAINT EGREVE (FR); Vivet, Pascal, 38760, SAINT PAUL DE VARCES (FR); Beigne, Edith, 38112, MEAUDRE (FR)
(74) Mandataire: Poulin, Gérard

(56) Documents cités:
- BOLOTIN E ET AL: "Cost considerations in network on chip" INTEGRATION, THE VLSI JOURNAL, NORTH-HOLLAND PUBLISHING COMPANY. AMSTERDAM, NL, vol. 38, no. 1, octobre 2004 (2004-10), pages 19-42, XP004641563 ISSN: 0167-9260
- BANERJEE N ET AL: "A power and performance model for network-on-chip architectures" DESIGN, AUTOMATION AND TEST IN EUROPE CONFERENCE AND EXHIBITION, 2004. PROCEEDINGS FEB. 16-20, 2004, PISCATAWAY, NJ, USA,IEEE, vol. 2, 16 février 2004 (2004-02-16), pages 1250-1255, XP010684421 ISBN: 0-7695-2085-5

## Description

### DOMAINE TECHNIQUE ET ART ANTÉRIEUR

La présente invention se rapporte au domaine des réseaux sur puce ou NoC (NoC ou « Network on Chip » selon la terminologie anglo-saxonne). Elle concerne un procédé de transfert de données dans un réseau sur puce, en particulier au moyen d'un protocole asynchrone de type « requête/acquittement » également appelé « send/accept », ainsi qu'une structure de réseau sur puce améliorée, permettant de mettre en oeuvre de tels transferts.

Cette structure est susceptible de pouvoir fonctionner de manière globalement asynchrone, même dans le cas où elle comprend des unités ou blocs implémentés en logique synchrone. Cette structure ne fait pas nécessairement appel à une logique spécialisée, et peut comporter à la fois des éléments, en particulier des noeuds, implémentés en logique synchrone, et d'autres éléments, en particulier d'autres noeuds, implémentés en logique asynchrone. Cette structure permet de mettre en oeuvre différents types de services, tel que par exemple un service dit « de latence garantie » et un autre service communément appelé « de best effort » ou meilleur effort. L'implémentation de ces différents services ainsi que la gestion des priorités entre des paquets de données transitant dans une telle structure est au moins en partie assurée à l'aide de canaux de priorité dits « canaux virtuels » auxquels les paquets de données sont associés.

Actuellement, pour faire communiquer entre eux différents modules d'un ASIC (ASIC pour « Application Specific Integrated Circuit » ou « circuits intégrés à application spécifique ») ou d'une puce, le moyen principalement utilisé est une topologie de bus. Avec ce type de topologie, les modules d'une puce devant communiquer entre eux sont reliés à un même médium de communication qu'ils utilisent à tour de rôle par exemple pour émettre des données. Un élément central, appelé « arbitre de bus », donne le droit d'accès au médium pour les différents modules afin d'éviter des conflits de prise du bus.

Ce système a notamment pour inconvénient de présenter des débits de communications faibles, pouvant entraîner une latence importante, ainsi que d'être de plus en plus difficile à réaliser en particulier en ce qui concerne les arbres d'horloge, à cause notamment des problèmes de charge capacitive. Il est par ailleurs délicat d'adapter de manière précise le débit assuré par un bus de communication d'une puce à l'application qui est réalisée par l'ensemble des modules de la puce. Par ailleurs, un tel système est généralement très spécifique à une application donnée et empêche généralement une fois qu'il a été conçu pour une application, d'être facilement réutilisé pour une autre application.

En vue d'améliorer les problèmes précités, des réseaux sur puce ou NoC (NoC pour « Network on Chip ») sont apparus.

Une proposition de réseau sur puce a par exemple été faite par Goossens et al. dans le document « Trade offs in the design of a router both guaranteed and best-efforts service for networks on chip », Proceedings of DATE conference, 2003, p 350-355. Dans ce document est décrit notamment une architecture de réseau sur puce doté d'un médium de communication avec une topologie de type matriciel ou de maillage. Ce médium de communication comporte des noeuds de routage susceptibles de réaliser deux types de routage différents. Un premier type de routage est mis en oeuvre pour permettre d'assurer un premier type de service dit de temps « de latence garantie » pour lequel le temps mis par des données allant d'une première ressource vers un deuxième ressource est sensiblement constant. Un deuxième type de routage est mis en oeuvre pour permettre d'assurer un deuxième type de service communément appelé « best effort », pour lequel on utilise au maximum la capacité des liens du réseau reliant les noeuds de routage. Dans cette architecture, l'accès au médium de communication est réglé par une horloge globale au réseau au moyen d'un multiplexage temporel (« time multiplexing » selon la terminologie anglo-saxonne). La mise en oeuvre d'une telle architecture peut s'avérer complexe, notamment en ce qui concerne le placement-routage de ses éléments, ainsi que la réalisation de son arbre d'horloge. La maîtrise de la consommation d'une telle architecture de réseau peut être également délicate, en particulier la consommation due à l'arbre d'horloge.

Une proposition de réseau sur puce dans lequel les noeuds de routage communiquent entre eux de manière asynchrone a été faite par Brainbridge et S. Furber dans « Delay Insensitive System on Chip Interconnect » Using 1 of 4 Data Encoding », Proceedings of International Symposium on Advanced Research in Asynchronous Circuits and Systems, March 2001, pages 118 à 126. Les données transitant dans un tel réseau, sont par ailleurs codées au moyen d'un codage de type communément appelé « one hot encoding ». Ce réseau a cependant notamment pour inconvénient d'utiliser une logique spécifique, ce qui rend sa réalisation difficile. Par ailleurs, un tel réseau ne met pas en oeuvre des types de services différents, par exemple un service de latence « garantie » et un service communément appelé de « best effort ».

Les documents : «Quality of Service (QoS) for Asynchronous On-Chip Networks», T.Felicijan, S.B.Furber, Formal Methods for Globally Asynchronous Locally Synchronous Architecture (FMGALS 2003) Pisa, Italy, Sept. 2003*,* et « An Asynchronous On-Chip Network Router with Quality-of-Service (QoS), T.Felicijan, S.B.Furber Support Proceedings IEEE International SOC Conference, Santa Clara, CA, Sept. 2004, pp 274-277, ISBN: 0-7803-8445-8*,* proposent des méthodes de gestion de la qualité de service dans un réseau sur puce asynchrone dotés d'éléments, et en particulier de noeuds de routage implémentés en logique asynchrone, au moyens de canaux virtuels.

Le document : Bolotin E et al : « Cost Considerations in Network on Chip », Integration, the VLSI Journal, North-Holland Publishing Company, Amsterdam, NL, volume 38, n°1, Oct. 2004, pp19-42 (Dl), présente une architecture de réseau sur puce appelée QNoC pour Quality of Service NoC, comportant une grille de routeurs, reliés entre eux par des liaisons point à point.

Un paquet de données transitant dans un tel réseau est divisé en une pluralité de flits. Un transfert de flits entre deux routeurs du réseau sur puce, peut être effectué à l'aide d'un protocole dit par poignée de main (« handshake »). Différents niveaux de priorité peuvent être associés aux données transitant dans ce réseau.

Il se pose le problème de trouver un nouveau procédé de transfert de données dans un réseau sur puce globalement asynchrone susceptible de comporter des éléments implémentés en logique synchrone et/ou des éléments implémentés en logique asynchrone, ainsi qu'une nouvelle structure de réseau sur puce au fonctionnement globalement asynchrone ou qui ne fait pas appel à une horloge globale pour gérer les transferts de données en son sein, susceptible de comporter des éléments implémentés en logique synchrone et/ou des éléments implémentés en logique asynchrone, et qui est susceptible de mettre en oeuvre différents types de services par exemple suivant que l'on souhaite privilégier un transfert rapide de données, entre certaines ressources ou, de certaines données, ou bien suivant si l'on souhaite obtenir un débit garanti entre certaines ressources ou pour certaines données.

### EXPOSÉ DE L'INVENTION

L'invention met en oeuvre une structure de réseau sur puce amélioré, ainsi qu'un procédé amélioré de transfert ou de transmission de données dans un tel réseau.

L'invention concerne tout d'abord un procédé de transmission de données dans un réseau sur puce formé d'une pluralité d'éléments aptes à communiquer entre eux, la pluralité d'éléments comportant une pluralité de ressources aptes à effectuer des traitements de données, et une pluralité de noeuds aptes à relier des ressources entre elles et à réaliser un aiguillage des données dans le réseau, chaque noeud étant doté d'une pluralité d'entrées et d'une pluralité de sorties, le procédé comprenant :
- au moins une étape de transfert, depuis un élément émetteur du réseau vers un élément récepteur du réseau, d'au moins un paquet de données comportant un ou plusieurs groupes élémentaires de données appelés « flits », au moyen d'un protocole de communication asynchrone, le transfert d'un ou de plusieurs groupes élémentaires de données ou de tous les groupes élémentaires de données dudit paquet, étant accompagné par un envoi ou associé à un envoi par l'élément émetteur d'au moins un signal d'un premier type, suivant ledit protocole, le transfert étant en outre autorisé par l'élément récepteur par un envoi par cet élément récepteur, en réponse au signal du premier type, d'au moins un autre signal d'un deuxième type, suivant ledit protocole.

Les paquets de données transitant dans le réseau peuvent être associés chacun à une information de niveau priorité ou de canal de priorité, choisie parmi un ensemble de canaux de priorité différents.

Selon une possibilité de mise en oeuvre du procédé dans laquelle, ledit paquet de données est associé à une information de priorité ou de canal de priorité, ledit signal du premier type suivant ledit protocole de communication asynchrone peut comporter au moins en partie l'information de priorité ou de canal de priorité auquel ce paquet est associé.

Selon une variante de mise en oeuvre du procédé, le signal du premier type accompagnant l'envoi d'un groupe élémentaire de données, et ledit groupe élémentaire de données peuvent être émis simultanément.

Le protocole mis en oeuvre pour permettre de tels transfert peut être un protocole de haut niveau implémenté en logique synchrone ou/et asynchrone. Ce protocole peut ainsi permettre d'établir des transferts de données entre au moins deux blocs de réseau, respectivement synchrone, mais fonctionnant de manière déphasée, par exemple entre au moins un premier noeud du réseau associé à une première horloge, et au moins un deuxième noeud, associé à une deuxième horloge, différente ou déphasée de la première horloge.

Ce protocole peut permettre également d'établir des transferts de données entre au moins deux blocs de réseau, respectivement asynchrone, par exemple entre au moins un premier noeud du réseau sans horloge, et au moins un deuxième noeud sans horloge.

Ce protocole peut également permettre d'établir des transferts de données entre au moins deux blocs du réseau, respectivement synchrone et asynchrone, par exemple entre au moins un premier noeud du réseau associé à une première horloge, et au moins un autre noeud asynchrone ou sans horloge.

Ce protocole peut être prévu pour qu'un flit donné ou un groupe élémentaire de données d'un paquet de données puisse être émis par l'élément émetteur dès lors qu'un autre flit, précédant ce flit donné dans ledit paquet, a été accepté par l'élément récepteur.

Selon une possibilité de mise en oeuvre du procédé de transfert de données selon l'invention, ce procédé peut comprendre en outre :
- au moins un arbitrage par au moins un premier élément du réseau, par exemple un premier noeud du réseau d'un ordre de transfert en sortie du premier noeud entre au moins un premier paquet de données et au moins un deuxième paquet de données, l'ordre de transfert étant déterminé au moins partiellement en fonction d'un canal de priorité ou de canaux de priorité au (x) quel (s) le premier paquet et le deuxième paquet ont été associés par une ressource du réseau.

Le premier paquet peut avoir été associé par une ressource à un premier canal de priorité choisi parmi un ensemble de canaux prédéterminés. Le deuxième paquet peut quant à lui avoir été associé par une ressource, différente ou par la même ressource à un deuxième canal de priorité choisi parmi un ensemble de canaux prédéterminés, et de niveau de priorité différent de celui du premier canal.

L'association, d'un paquet de données à un canal de priorité, peut au moins en partie dépendre du type de données que comporte ce paquet.

Par exemple, des paquets provenant de différentes ressources et comportant des données d'un premier type, par exemple des données d'interruption peuvent être associés à un même premier canal de priorité, tandis que d'autres paquets de données provenant de différentes ressources et comportant des données d'un deuxième type, par exemple des données de calcul ou de programmation, peuvent être associés à un même deuxième canal de priorité, de niveau de priorité différent de celui du premier canal.

L'association effectuée par une ressource, d'un paquet de données à un canal de priorité, peut permettre de lier ce paquet à un type de service.

Ainsi, les différents canaux de priorité ou canaux virtuels dudit ensemble de canaux prédéterminé, peuvent également permettre d'assurer différents types de services de transferts de données, par exemple au moins un service communément appelé de « best effort » ou « meilleur effort » et au moins un autre service communément appelé de « latence garantie ». Ces différents services peuvent être implémentés, avec un seul système de routage.

Lors de l'étape d'arbitrage, l'ordre de transfert entre le premier paquet et le deuxième paquet peut être éventuellement déterminé uniquement en fonction des niveaux de priorité respectifs du premier canal et du deuxième canal. Ce peut être le cas, par exemple, lorsque le premier paquet et le deuxième paquet sont associés à des canaux différents. L'ordre de transfert entre le premier paquet et le deuxième paquet peut être alors éventuellement déterminé indépendamment de leur ordre d'arrivée respectif au premier noeud ou de leur provenance respective.

Selon une première variante du procédé de transmission de données, pour laquelle le premier paquet de données et le deuxième paquet de données ont été associés respectivement à un premier canal et à un deuxième canal, de niveau de priorité inférieur à celui du premier canal, un premier groupe de données du premier paquet et un autre groupe de données du deuxième paquet ayant accédé au premier noeud et s'apprêtant à accéder à une sortie ou à une même sortie du premier noeud, le procédé peut comprendre en outre après l'étape d'arbitrage :
- le transfert, en sortie du premier noeud du premier paquet de données,
- le transfert, en sortie du premier noeud, du deuxième paquet de données après que l'intégralité du premier paquet ait été transféré en sortie du premier noeud.

Selon une possibilité, le procédé peut comprendre en outre, après l'étape d'arbitrage et avant l'étape de transfert de l'intégralité du deuxième paquet :
- l'arrêt au niveau du premier noeud, au moins partiel, du deuxième paquet.

Dans un cas où avant l'étape d'arbitrage, le transfert du deuxième paquet en sortie du premier noeud a déjà débuté et qu'au moins un deuxième groupe de données du deuxième paquet a déjà été transféré en sortie du premier noeud et/ou est déjà sorti du premier noeud, tandis qu'aucune donnée du premier paquet de données n'a encore été transféré en sortie du premier noeud et/ou n'est déjà sorti du premier noeud, le procédé peut comprendre en outre :
- l'arrêt dudit autre groupe de données du deuxième paquet,
- le déplacement ou transfert dans le réseau dudit deuxième groupe de données du deuxième paquet.

Ainsi, selon une possibilité de mise en oeuvre, des données du deuxième paquet déjà sorties du premier noeud peuvent se déplacer, même si le transfert de ce deuxième paquet en sortie du premier noeud a été provisoirement stoppé.

Dans un cas où avant l'étape d'arbitrage, au moins un troisième groupe de données du deuxième paquet n'a pas encore accédé au premier noeud, le procédé peut comprendre en outre, après l'étape d'arbitrage et éventuellement pendant un arrêt partiel du deuxième paquet de données :
- le transfert en entrée du premier noeud d'au moins une partie des données du troisième groupe de données du deuxième paquet.

Ainsi, selon une possibilité de mise en oeuvre, des données du deuxième paquet qui n'ont pas encore accédé au premier noeud lorsque le transfert du deuxième paquet en sortie du premier noeud a été provisoirement stoppé, peuvent accéder à ce premier noeud.

Dans un cas pour lequel, après l'étape d'arbitrage et préalablement au transfert du deuxième paquet, au moins un troisième paquet de données associé à un canal de niveau de priorité supérieur à celui du deuxième canal, accède au premier noeud et s'apprête à accéder à ladite sortie du premier noeud, le procédé peut comprendre en outre :
- le transfert en sortie du premier noeud, de l'intégralité dudit troisième paquet, préalablement au transfert de l'intégralité du deuxième paquet.

Dans un cas où, le troisième paquet est associé à un canal de niveau de priorité égal à celui du premier canal, ledit transfert en sortie du premier noeud, de l'intégralité dudit troisième paquet peut être réalisé après le transfert de l'intégralité du premier paquet et préalablement à l'étape de transfert de l'intégralité du deuxième paquet.

Dans un cas où, le troisième paquet est associé à un canal de niveau de priorité supérieur à celui du premier canal, ledit transfert en sortie du premier noeud, de l'intégralité dudit troisième paquet peut être réalisé préalablement à l'étape de transfert du premier paquet.

Selon une deuxième variante du procédé de transmission de données, dans lequel à l'étape a), le premier paquet de données et le deuxième paquet de données sont respectivement associés à un même canal de priorité, l'arbitrage de l'ordre de transfert peut être déterminé en outre en fonction de l'ordre d'arrivée respectif au premier noeud, du premier paquet et du deuxième paquet. Un arbitrage de type « premier entré premier servi » peut être par exemple utilisé.

L'arbitrage de l'ordre de transfert peut être également déterminé en outre en fonction de l'entrée du premier noeud par laquelle, le premier paquet et le deuxième paquet ont respectivement accédé à ce premier noeud. Par exemple dans le cas d'un noeud comportant une entrée « nord », une entrée « est », une entrée « ouest », une entrée « sud », un arbitrage de type entrée « nord » prioritaire par rapport à entrée « est » prioritaire par rapport à entrée « sud » prioritaire par rapport à entrée « ouest » peut être par exemple utilisé.

Dans un cas où à l'étape d'arbitrage, un premier groupe de données du premier paquet de données et un autre groupe de données du deuxième paquet ont déjà accédé au premier noeud et s'apprêtent à accéder à une sortie ou à une même sortie du premier noeud, et un deuxième groupe de données du deuxième paquet de données a déjà été transféré en sortie du premier noeud ou est déjà sorti du premier noeud, le procédé peut comprendre en outre après l'étape d'arbitrage :
- le transfert du deuxième paquet de données en sortie du premier noeud,
- le transfert du premier paquet de données en sortie du premier noeud après que l'intégralité du deuxième paquet ait été transférée en sortie du premier noeud.

Dans un cas où au moins un troisième paquet de données associé à un canal de niveau de priorité supérieur au niveau de priorité du canal auquel le premier paquet et le deuxième paquet sont chacun associés, accède au premier noeud après l'étape d'arbitrage et préalablement au transfert de l'intégralité du deuxième paquet, et s'apprête à accéder à ladite sortie du premier noeud, le procédé peut comprendre en outre :
- le transfert en sortie du premier noeud, de l'intégralité dudit troisième paquet, préalablement à l'étape de transfert du premier paquet de données en sortie du premier noeud.

Dans un cas où le troisième paquet de données accède préalablement ou pendant l'étape de transfert du deuxième paquet, le procédé peut comprendre en outre : le transfert en sortie du premier noeud, de l'intégralité dudit troisième paquet, préalablement à l'étape de transfert de l'intégralité du premier paquet.

Le routage des données dans le réseau peut être de type déterministe.

Ainsi, selon une mise en oeuvre dans laquelle le premier paquet et le deuxième paquet sont respectivement destinés à emprunter un premier trajet dans le réseau, et un second trajet dans le réseau, le procédé peut comprendre en outre : la détermination du premier trajet et du deuxième trajet, préalablement à l'émission du premier paquet et du deuxième paquet.

La route ou le trajet que les paquets de données transitant dans le réseau sont destinés à emprunter peut avoir été affecté respectivement par la ou les ressources ayant émises ces données.

Ainsi, selon une possibilité de mise en oeuvre de cette variante, le procédé peut comprendre en outre préalablement à l'étape b) :
- l'affectation par une ressource au premier paquet, de données relatives au premier trajet, et par une ressource au deuxième paquet, de données relatives au deuxième trajet.

Les données de routage ou de trajet affectées à un paquet peuvent être sous forme d'une liste ordonnée de données de directions que le paquet est destiné à emprunter dans le réseau. Ainsi, les données relatives audit premier trajet peuvent être sous forme d'une première liste ordonnée de données de directions que le premier paquet est destiné à emprunter dans le réseau, tandis que les données relatives audit deuxième trajet sont sous forme d'une deuxième liste ordonnées de directions que le deuxième paquet est destiné à emprunter dans le réseau.

Selon une possibilité de mise en oeuvre du procédé, ce dernier peut comprendre en outre :
- la modification par le premier noeud, de la première liste ordonnées de données de directions préalablement au transfert du premier paquet en sortie du premier noeud, et de la deuxième liste ordonnées de données de directions préalablement au transfert du deuxième paquet en sortie du premier noeud.

Le réseau peut être globalement asynchrone. Ainsi, un ou plusieurs éléments du réseau, par exemple un ou plusieurs noeuds peuvent être régis par une première horloge, tandis qu'un ou plusieurs autres éléments du réseau, par exemple une ou plusieurs ressources ou un ou plusieurs autres noeuds du réseau sont régis respectivement par une horloge différente de la première horloge ou par une horloge qui n'est pas synchrone avec la première horloge. Ainsi l'invention met ne oeuvre une méthode de conception de réseau sur puce comprenant:
- la réalisation séparée, d'au moins un premier bloc de réseau comportant au moins un noeud ou/et au moins une ressource associé(e) (s) à une première horloge, et d'au moins un deuxième bloc de réseau comportant au moins un autre noeud ou/et au moins une autre ressource associé(e) (s) à une deuxième horloge indépendante de la première horloge,
- l'assemblage ou l'association en réseau du premier et deuxième blocs.

Selon une variante, le réseau peut être globalement asynchrone et doté d'éléments asynchrones, par exemple de noeuds asynchrones. Ainsi, un ou plusieurs éléments, par exemple un ou plusieurs noeuds, peuvent ne pas être régi(s) par une horloge. La synchronisation entre éléments asynchrones peut être réalisée de manière locale, par exemple par d'une signalisation dite de « poignée de main » ou de type « requête/acquittement ».

Selon une autre possibilité de mise en oeuvre du procédé de transfert de données selon l'invention, ce procédé peut comprendre en outre :
- au moins un arbitrage par au moins un premier élément du réseau, par exemple une première ressource du réseau, d'un ordre de transfert en sortie de cette première ressource entre au moins un premier paquet de données et au moins un deuxième paquet de données, l'ordre de transfert étant déterminé au moins partiellement en fonction d'un canal de priorité ou de canaux de priorité au(x)quel(s) le premier paquet et le deuxième paquet ont été associés par cette première ressource.

L'invention prévoit également une méthode de conception d'un réseau sur puce comprenant :
- la conception séparée d'au moins un premier bloc de réseau comportant au moins un noeud ou/et au moins une ressource associé(e) (s) à une première horloge, et au moins un deuxième bloc de réseau comportant au moins un autre noeud dépourvu d'horloge ou/et au moins une autre ressource dépourvue d'horloge,
- l'assemblage ou l'association en réseau du premier et deuxième bloc.

L'invention concerne également un dispositif de réseau sur puce comprenant : une pluralité d'éléments aptes à communiquer entre eux, dont une pluralité de ressources aptes à effectuer des traitements de données, et un ou plusieurs noeuds dotés d'une ou plusieurs entrées et d'une ou plusieurs sorties, aptes à réaliser un aiguillage de données, au moins deux éléments du réseau comprenant :
- des moyens d'émission de données, aptes à émettre des données sous forme de paquets comportant un ou plusieurs groupes élémentaires de données,
- des moyens de réception de données, aptes à recevoir des données sous forme de paquets comportant un ou plusieurs groupes élémentaires de données,
- des moyens d'émission de signaux de synchronisation selon un protocole de communication asynchrone, par exemple de type appelé « send/accept », aptes à émettre au moins premier type de signal, accompagnant un envoi, ou associé à un envoi, d'un groupe élémentaire de données,
- des moyens de réception de signaux de synchronisation selon ledit protocole asynchrone, aptes à recevoir au moins un signal d'un deuxième type, préalablement à une réception d'un groupe élémentaire de données, comportant en outre :
   - des moyens pour autoriser l'émission d'un groupe élémentaire de données d'un paquet suite à la réception d'un signal de synchronisation du deuxième type, et pour autoriser la réception d'un groupe élémentaire de données d'un paquet suite à la réception d'un signal de synchronisation du premier type.

Selon une possibilité de mise en oeuvre du dispositif, le signal du premier type associé à un envoi d'un groupe élémentaire de données, et ce groupe élémentaire de données peuvent être émis simultanément.

Les paquets de données transitant dans un tel dispositif peuvent être chacun associés à une information de priorité ou de canal de priorité. Ledit protocole asynchrone peut contenir les informations de priorité ou de canal de priorité.

Ainsi, le premier type de signal suivant ledit protocole asynchrone, émis par les moyens d'émissions de signaux de synchronisation, et accompagnant l'envoi d'un groupe élémentaire de données d'un paquet de données, peut comporter au moins en partie l'information de priorité ou de canal de priorité auquel le paquet de données est associé.

Selon une possibilité de mise en oeuvre du dispositif suivant l'invention, ce dernier peut comprendre en outre :
- au moins une première ressource comportant des moyens d'association de priorité, aptes à associer, à au moins un paquet de données que cette ressource est destinée à émettre, au moins un canal de priorité choisi parmi un ensemble prédéterminé de canaux de priorité, par exemple en fonction du type de donné que comporte ce paquet.
- au moins un premier élément, par exemple un premier noeud comprenant en outre :
   des moyens d'arbitrage, aptes à déterminer un ordre de transfert en sortie du premier noeud entre au moins un premier paquet associé à un canal de priorité et au moins un deuxième paquet de données associé à un canal de priorité parvenant en entrée du premier noeud, l'ordre de transfert étant déterminé au moins en fonction d'un canal ou de canaux respectif(s) de priorité au(x)quel(s) le premier paquet et le deuxième paquet ont été associés par une ressource respective du réseau.

Le réseau peut avoir un fonctionnement globalement asynchrone.

Ainsi, selon une possibilité de mise en oeuvre du dispositif, le premier noeud peut être régi par une première horloge, le réseau peut comprendre au moins un deuxième noeud, régi par une deuxième horloge, différente de la première horloge ou qui n'est pas synchrone avec la première horloge.

Le dispositif de réseau sur puce peut être éventuellement doté d'un ou de plusieurs noeuds asynchrones. Selon une possibilité de mise en oeuvre du dispositif de réseau sur puce, ce dernier peut comprendre un ou plusieurs noeuds asynchrones, qui ne sont pas régis par une horloge, et un ou plusieurs autres noeuds synchrones, qui sont régis par une horloge.

Selon une possibilité de mise en oeuvre du dispositif de réseau sur puce, ladite première ressource peut comprendre en outre :
- des moyens d'affectation de données de trajet, aptes à affecter à au moins un paquet de données que la première ressource est destinée à émettre, des données relatives au trajet que ce paquet est destiné à emprunter dans le réseau.

Selon un mode de réalisation du réseau, dans lequel le premier paquet et le deuxième paquet de données ont été associés respectivement à des premières données de trajet, par exemple sous forme d'une première liste ordonnée de directions à emprunter, et à des deuxièmes données de trajet, par exemple sous forme d'une deuxième liste ordonnée de directions à emprunter, par une ressource respective du réseau, le premier noeud peut comprendre en outre :
- des moyens de routage de données, aptes à effectuer un routage dudit premier paquet et dudit deuxième paquet au moins partiellement ou totalement en fonction de données de trajets respectives auxquelles le premier paquet et le deuxième paquet ont été associés respectivement par une ressource du réseau.

Selon un mode de réalisation du dispositif de réseau sur puce, le premier noeud peut comprendre en outre : des moyens de mémorisation de données trajet.

Selon une variante de réalisation du dispositif de réseau sur puce, le premier noeud peut comprendre en outre : des moyens de modification, par exemple de décalage, des données trajet. Ce décalage peut permettre de préparer les données de trajet pour un noeud voisin.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- les figures 1A, 1B, 1C représentent des exemples d'architecture de réseau sur puce mis en oeuvre suivant l'invention,
- la figure 2 représente un exemple de chronogramme illustrant un mécanisme de synchronisation, à l'aide d'un protocole de type « send/accept», dans un réseau sur puce mis en oeuvre suivant l'invention, entre un élément émetteur de données et un élément récepteur desdits données,
- les figures 3A-3F représentent différentes étapes d'un exemple de procédé de transfert de données,
- les figures 4A-4C représentent un exemple de structure de noeud d'aiguillage des données dans un réseau sur puce mis en oeuvre suivant l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### DESCRIPTION DETAILLEE

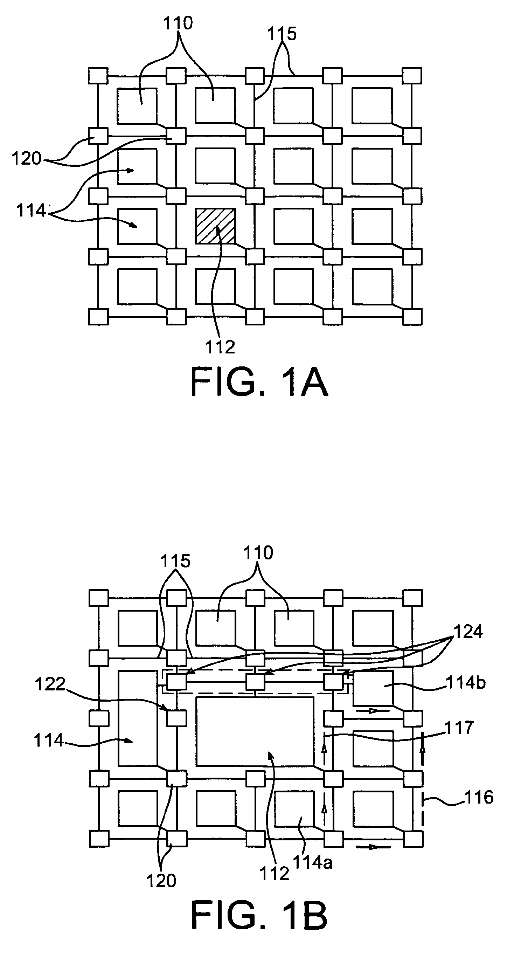

La figure 1A représente un exemple d'architecture de communication ou réseau sur puce (NoC pour « network on Chip » selon la terminologie anglo-saxonne) mise en oeuvre suivant l'invention et dotée d'une topologie de type matriciel ou de « maillage ».

Cette architecture comprend une pluralité d'éléments référencés 110 aptes à effectuer des traitements de données, et à communiquer entre eux en s'échangeant notamment des données. Parmi l'ensemble des éléments 110 compris dans une telle architecture, peut figurer un élément noté 112 jouant le rôle de maître et permettant notamment d'initier les communications sur le réseau. Cet élément 112 que l'on nommera « contrôleur de réseau », a ainsi la possibilité de programmer les communications entre une pluralité d'autres éléments du réseau que l'on nommera « ressources » 114, et qui permettent quant à elles de réaliser des tâches telles que des traitements de données élémentaires, par exemple des calculs, ou des stockages de données, ou des codages/décodages de données. Le contrôleur de réseau 112 peut se présenter par exemple sous forme d'un processeur ou d'un microcontrôleur. Ce dernier peut également avoir pour fonction, notamment celles d'effectuer des calculs et de gérer des interruptions. Chacune des ressources 114 peut être de type générique, par exemple sous forme d'un processeur ou d'un DSP (DSP pour « Digital Signal Processor » ou « processeur de signal numérique ») ou de type spécifique comme une mémoire, par exemple de type SRAM (SRAM pour « static random access memory » ou « mémoire vive statique ») ou un module de traitement spécialisé, tel que par exemple un module spécialisé dans le calcul d'une FFT (FFT pour Fast Fourier Transform ou « transformée de Fourier rapide ») ou par exemple tel qu'un module codeur ou/et décodeur MPEG (MPEG pour « moving pictures expert groups »). Chaque ressource 114 de la structure de réseau comporte des moyens ou une partie appelée « coeur fonctionnel », dédiée notamment aux traitements de données ou/et aux calculs, ainsi que d'autres moyens ou une autre partie nommée « interface réseau », et qui permet(tent) à la ressource 114 de communiquer avec le réseau.

Les ressources 114 du réseau sont reliées entre elles et s'échangent entre elles des données par l'intermédiaire de liens 115 et de noeuds 120. Les ressources 114 du réseau sont également aptes à arbitrer un ordre de transfert entre différentes données ou différents flux de données en leur sein. Ainsi, chaque ressource du réseau peut être amenée à déterminer parmi plusieurs paquets de données que cette ressource est destinée à émettre en sortie, quel paquet de données transmettre en sortie en premier ou transférer en sortie en premier.

Les noeuds 120 permettent d'établir une connexion physique, à l'aide par exemple de multiplexeurs, entre un ou plusieurs liens entrant et un ou plusieurs liens sortant, ainsi qu'un aiguillage des communications entre les ressources 114. Avec la topologie dite « de maillage » ou matricielle illustrée sur le figure 1A, chaque noeud 120 est relié à quatre autres noeuds voisins et est relié ou associé à une des ressources 114.

En ce qui concerne l'aiguillage de données, les noeuds 120 sont aptes à effectuer un routage de données. Ainsi un noeud du réseau peut être amené à déterminer vers quel lien ou vers quel noeud voisin du réseau transmettre ou envoyer une donnée ou un paquet de données qu'il reçoit.

Le routage effectué au sein des noeuds du réseau peut être de type déterministe. Dans ce cas, chaque noeud du réseau est susceptible d'effectuer un routage d'un paquet de données uniquement ou principalement en fonction d'informations de routage, contenues dans le paquet de données qu'il reçoit. Ces informations de routage indiquent le trajet que ce paquet de données est destiné à emprunter dans le réseau et peuvent avoir été introduites dans ledit paquet ou avoir été affectées au paquet par une ressource du réseau ayant émis ce paquet.

Les noeuds 120 du réseau sont également aptes à effectuer un arbitrage des données. Ainsi, chaque noeud du réseau peut être amené à déterminer parmi plusieurs paquets de données qu'il reçoit, quel paquet de données transmettre ou transférer en premier. Chaque noeud du réseau peut être prévu pour gérer d'éventuels conflits entre des données lui parvenant, et déterminer par exemple parmi plusieurs données ou paquets de données lui parvenant et destinées à emprunter une même sortie de ce noeud ou un même lien rattaché à ce noeud, quel paquet de données transmettre en premier vers ladite sortie ou vers ledit lien.

Avantageusement, chaque noeud peut être prévu pour arbitrer, éventuellement simultanément, plusieurs ordres de transferts ou plusieurs conflits de transferts de paquets au niveau de plusieurs de ses sorties.

Le fonctionnement global ou mode de transmission global de données dans le réseau peut être asynchrone, de sorte que la transmission ou le transfert de données dans le réseau peut ne pas être réglé par une horloge globale, commune à tous les noeuds et/ou toutes les ressources du réseau. Ainsi, au moins deux noeuds du réseau ou/et au moins un noeud et une ressource du réseau peuvent être régis par des horloges différentes. Un ou plusieurs éléments, par exemple un ou plusieurs noeuds, d'un premier bloc du réseau peuvent être régis par une première horloge, tandis qu'un ou plusieurs autres éléments du réseau, par exemple un ou plusieurs autres noeuds, d'un deuxième bloc peuvent être régis par une horloge différente de la première horloge ou par une horloge qui n'est pas synchrone avec la première horloge. Selon une variante, un ou plusieurs noeuds du réseau peuvent être respectivement asynchrones et dépourvus d'horloge.

L'architecture de réseau sur puce mise en oeuvre suivant l'invention n'est pas limitée à la topologie de maillage illustrée sur la figure 1A et peut avoir une toute autre topologie, par exemple une topologie de type hypercube, arbre, anneau, ou tore, etc....

La figure 1B représente une variante de l'architecture qui vient d'être décrite, et dans laquelle figure des noeuds supplémentaires par rapport au maillage illustré sur la figure 1A.

Parmi ces noeuds supplémentaires, figurent certains noeuds appelés noeuds répéteurs 122 qui ne sont pas reliés à une ressource et jouent le rôle de « pipeline » dans le réseau. Ces noeuds 122 peuvent permettre d'augmenter le débit du réseau.

Cette variante d'architecture de réseau peut avoir été conçue spécifiquement en vue d'une application ou d'un ensemble de traitements, pour laquelle ou pour lesquels des contraintes de latence, et de débit sont prédéterminées ou prédites. Lors de la conception du réseau, d'autres noeuds supplémentaires ou noeuds « spéciaux » 124 peuvent avoir été introduits en des lieux ou des zones spécifiques (délimitée par des traits discontinus sur la figure 1B) du réseau où le trafic de données est destiné à être important. Ces noeuds spéciaux 124 peuvent ainsi permettre au réseau de soutenir les contraintes de débit et de latence prédéterminées ou prédites.

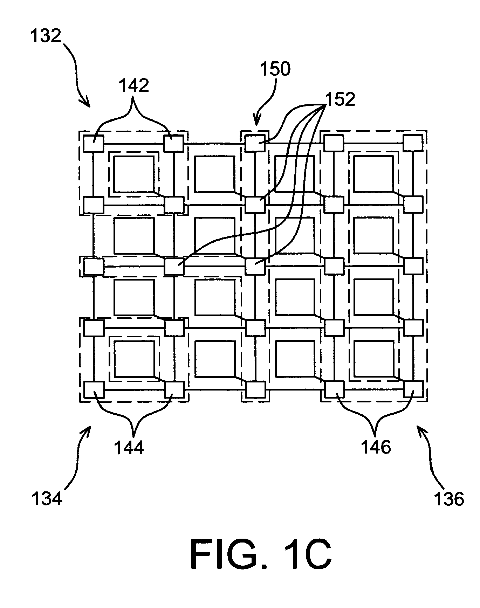

La figure 1C représente une variante de l'une des architectures qui viennent d'être décrites, dans laquelle figure un ensemble 150 (délimité par des traits discontinus sur la figure 1C) de noeuds 152 asynchrones ou qui sont dépourvus d'une horloge, et réalisant une séparation ou une interface entre plusieurs autres ensembles 132, 134, 136 (également délimités par des traits discontinus sur cette figure) comportant respectivement des noeuds 142, 144, 146 synchrones ou régis par une horloge.

Une telle variante d'architecture de réseau peut être moins encombrante et plus rapide à concevoir qu'une architecture dotée uniquement de noeuds asynchrones ou dépourvus d'horloge.

Dans l'une ou l'autre des architectures de réseau qui ont été décrites précédemment, les données échangées entre ressources 114 et qui transitent par les liens 115 et les noeuds 120, peuvent être sous forme de paquets de données. Un paquet peut être formé d'un groupe de données communément appelé « flit », ou de plusieurs groupes de données ou « flits » successifs destinés à emprunter un même trajet. Un flit est l'unité élémentaire de transmission de données dans le réseau. A un flit ou groupe élémentaire de données correspond une capacité d'un lien 115 ou à un nombre de connexions physiques ou de liaisons filaires comprises dans un lien 115. Un paquet de données circulant dans le réseau comprend généralement au moins un flit désignant son en-tête, ainsi qu'au moins un flit désignant sa fin, et éventuellement un ou plusieurs flits intermédiaires entre le flit d'en tête et le flit de fin. Un paquet de données peut éventuellement être formé d'un seul groupe élémentaire de données ou d'un seul flit. Dans ce cas, ce flit unique désigne à la fois l'en-tête et la fin du paquet. Un groupe élémentaire de données ou flit peut être formé de plusieurs bits, par exemple de 34 bits, et comprendre notamment des bits dits « d'information », servant à désigner la position de ce flit dans un paquet.

Un premier bit d'information dit bit « bop » (bop pour « begin of packet » ou « début de paquet ») peut par exemple servir à désigner, si oui ou non, le flit auquel ce bit « bop » appartient, est un flit d'en-tête d'un paquet.

Un deuxième bit d'information dit bit « eop » (eop pour « end of packet » ou « fin de paquet ») peut par exemple servir quant à lui à désigner, si ou non le flit auquel ce bit appartient, est un flit de fin de paquet.

L'information « bop » de début de paquet et l'information « eop » de fin de paquet peuvent être implémentées selon un codage différent. Un codage sur deux bits désignant, suivant la valeur de ces deux bits, si un flit est un flit de fin de paquet, ou de début de paquet, ou un flit intermédiaire, peut être par exemple utilisé.

Un flit d'un paquet de données peut comprendre également, mis à part les bits d'information, plusieurs autres bits de données, par exemple 32 autres bits de données comportant des informations relatives à un calcul ou à un traitement de données ou/et des informations d'adresse, ou/et des informations de programmation destinées à configurer le fonctionnement d'une ressource 114.
Un flit d'en-tête d'un paquet de données comprend quant à lui, mis à part les bits d'information de position, plusieurs bits spécifiques que l'on appellera « bits de contrôle », par exemple 14 bits de contrôle, pour permettre en particulier d'indiquer une configuration ou/et une commande d'une ressource recevant ce flit d'en-tête, par exemple une commande d'écriture de données ou une commande de lecture de données.

Un flit d'en-tête d'un paquet de données comprend également plusieurs autres bits spécifiques « de routage », par exemple 18 bits de routage. Dans le flit d'en-tête, les bits de routage indiquent un chemin, qui peut être le chemin complet que le paquet de données auquel appartient ce flit d'en-tête est destiné à emprunter dans le réseau. Ce chemin peut être sous forme d'une liste ordonnée de données de directions, chaque donnée de direction étant codée sur plusieurs bits.

Dans un cas, par exemple, d'un réseau à topologie de maillage, tel que décrit en liaison avec la figure 1, où des noeuds du réseau sont susceptibles d'être reliés respectivement à un noeud voisin « nord », un noeud voisin « est », un noeud voisin « sud », un noeud voisin « ouest » et à une ressource, une donnée de direction peut être codée sur deux bits. Les deux bits d'une donnée de direction indiquent alors par exemple une direction « nord » lorsqu'ils sont à une valeur « 00 », une direction « est » lorsqu'ils sont à une valeur « 01 », une direction « ouest », lorsqu'ils sont à une valeur « 11 », une direction « ouest » lorsqu'ils sont à une valeur « 10 ». Ainsi, dans le cas par exemple d'un paquet comportant 18 bits de routage, une liste de 9 directions codées chacune sur deux bits peut être prévue. Il peut être prévu que deux données de directions identiques, par exemple deux valeurs « 11 » et « 11 » consécutives dans la liste, ou deux valeurs « 10 », « 10 » consécutives dans la liste, indiquent d'effectuer un routage du paquet vers une ressource.

Pour effectuer le routage de paquets de données, les noeuds du réseau peuvent être prévus chacun pour, lorsqu'ils reçoivent un paquet, lire ou décoder une donnée de direction située à une position donnée prédéterminée de la liste ordonnée de direction, par exemple une donnée de direction positionnée en fin de liste, puis modifier ou décaler l'ordre la liste ordonnée, pour un noeud voisin suivant, de sorte qu'après décalage, une autre donnée de direction située à ladite position donnée prédéterminée, indique le routage à effectuer pour ledit noeud voisin suivant.

Ainsi, par exemple dans le cas d'un paquet comportant 18 bits de routage, et d'une liste de 9 directions codées chacune sur deux bits, les noeuds du réseau peuvent être prévus chacun pour, lorsqu'ils reçoivent le paquet, lire ou décoder les 2 bits de routage de poids faible, puis modifier l'ordre des bits de routage pour le noeud suivant, de sorte que les deux bits de routage qui étaient situés avant les bits de poids faible préalablement au décalage, deviennent, après ce décalage, les 2 bits de poids faible.

Comme cela a été décrit plus haut, pour permettre notamment de réduire le nombre de bits de routage d'un paquet, un codage spécifique des bits de routage peut être employé pour indiquer à un noeud d'effectuer le routage d'un paquet de données vers une ressource.

Les noeuds du réseau peuvent être prévus chacun pour, lorsqu'ils reçoivent un paquet, lire ou décoder une première donnée de direction située en fin de la liste ordonnée de direction de ce paquet, puis lire ou décoder la donnée de direction suivante dans la liste ordonnée de données de direction, et effectuer, si la donnée de direction suivante est identique à la première donnée de direction, un routage du paquet vers leur ressource respective.

Ainsi, par exemple dans le cas d'un paquet comportant 18 bits de routage, et d'une liste de 9 directions codées chacune sur deux bits, un noeud du réseau peut être prévu pour, lorsqu'il reçoit le paquet, lire ou décoder les 2 bits de routage de poids faible, puis lire ou décoder les 2 bits de routage suivant les 2 bits de poids faible, et, si les 2 bits de routage de poids faible et les 2 bits de routage suivant les 2 bits de poids faible sont identiques, transférer le paquet vers la ressource auquel il est relié.

Comme indiqué plus haut, en ce qui concerne le routage des paquets de données dans le réseau, ce dernier peut être de type déterministe. Ainsi, une ressource, avant d'émettre un paquet de données, peut établir un chemin que ce paquet de données est destiné à emprunter. Pour cela la ressource attribue ou affecte par exemple une valeur aux bits de routage du flit d'en-tête du paquet de données qu'elle émet.

Lorsqu'une première ressource 114a du réseau envoie un premier paquet de données à un instant t₁ vers une deuxième ressource du réseau 114b, le premier paquet de données peut être destiné à emprunter un chemin (désigné par une ligne discontinue fléchée référencée 116 sur la figure 1B) entre la première ressource 114a et la deuxième ressource 114b, établi par la première ressource 114a. Un noeud du réseau auquel parvient le premier paquet de données, effectue alors le routage de ce premier paquet de données uniquement ou principalement en fonction des bits de routage du flit d'en-tête. Pour un autre envoi par la première ressource 114a à un autre instant t₂ différent de l'instant t₁, d'un deuxième paquet de données à destination de la deuxième ressource 114b, est susceptible d'établir un chemin différent (désigné par une ligne discontinue fléchée et référencé 117 sur la figure 1B).

Pour qu'une ressource donnée du réseau puisse affecter à un paquet que cette ressource va émettre, des données relatives au chemin que ce paquet va emprunter dans le réseau, un calcul préalable ou « pré-calcul» de routage peut être effectué par exemple par le contrôleur de réseau ou par un processeur externe au réseau.

Ce calcul peut être réalisé au moyen d'un algorithme de routage adaptatif de type communément appelé « deadlock free », par exemple du type de celui décrit dans le document « The Turn Model for Adaptative Routing, C.J. Glass », L.M. Ni, Association for Computing Machinery, 1992. Une fois le calcul effectué, le contrôleur de réseau peut transmettre le résultat de calcul vers la ressource donnée.

La ressource donnée, en fonction de ce résultat, associe un chemin au paquet de données, en affectant par exemple une valeur aux bits de routage du flit d'en tête de ce paquet.

Le flot de données destiné à traverser l'un ou l'autre des réseaux précédemment décrits lors du déroulement d'un traitement ou d'une application, peut être de type communément appelé « wormhole », tel que décrit par exemple dans le document « A survey and comparison of wormhole routing technique in Mesh networks », K.M. Al-Tawil and al., IEEE network, March-April 1997, pp. 38-45). Pour un tel type de flots de données, dans un paquet de données émis par une ressource émettrice vers une ressource réceptrice, le flit d'en-tête effectue en premier le chemin entre la ressource émettrice et la ressource réceptrice, puis suivent éventuellement un ou plusieurs flits intermédiaires, répartis dans des noeuds du réseau déjà empruntés par le flit d'en-tête. Le flit de fin ferme quant à lui le chemin emprunté par le flot de données.

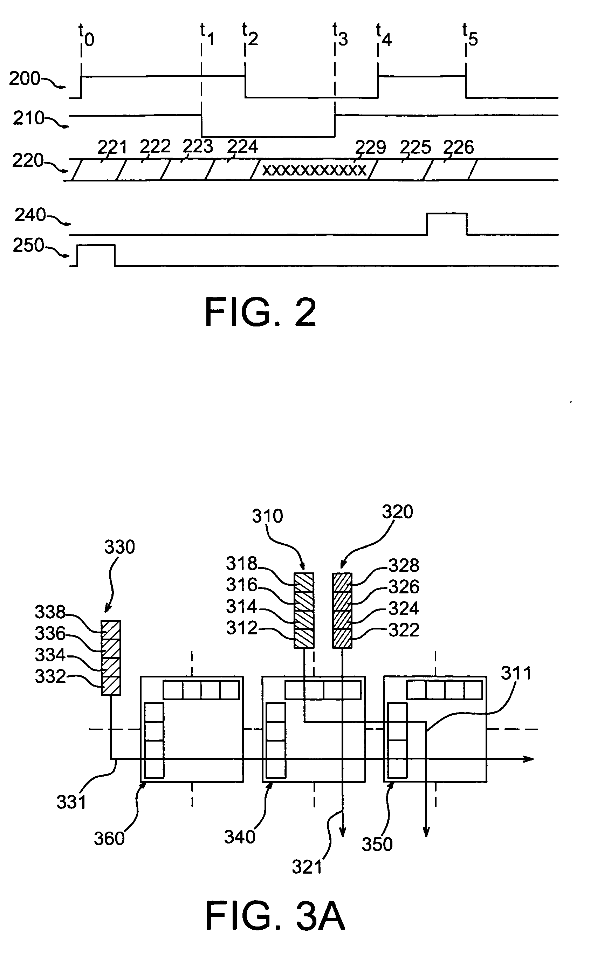

Un mécanisme de synchronisation entre un élément du réseau émetteur de données, par exemple un premier noeud et un élément du réseau récepteur des données, par exemple un deuxième noeud ou une ressource est illustré par le chronogramme de la figure 2. Le transfert de données entre l'élément émetteur et l'élément récepteur est réglé par un protocole de synchronisation de type que l'on appellera « send/accept » pour lequel un flit donné ou un groupe élémentaire de données d'un paquet de données peut être émis par l'élément émetteur dès lors qu'un autre flit, précédant ce flit donné dans ledit paquet, a été accepté par l'élément récepteur.

Les courbes 200 et 210 du chronogramme sont représentatives de signaux de synchronisations échangés par l'élément émetteur et l'élément récepteur. La courbe 220, est quant à elles représentatives de données échangées entre l'élément émetteur et l'élément récepteur.

Sur ce chronogramme, un signal d'émission 200 que l'on appellera signal « send » et qui provient de l'élément émetteur, annonce à un instant t₀, lorsque ce signal « send » passe par exemple à un état haut, que des données sont émises vers l'élément récepteur. Un signal d'acceptation 210 que l'on appellera signal « accept », provenant de l'élément récepteur, indique quant à lui, par exemple en étant à un état haut à cet instant t₀, que l'élément récepteur est apte à recevoir ces données. Ainsi, comme l'indique respectivement la courbe 220, un premier groupe de données ou premier flit est émis par l'élément émetteur et reçu par l'élément récepteur (le premier flit étant représenté par une portion 221 de la courbe 220).

Une courbe 250 du chronogramme, représentative d'un signal « bop », passe quant à elle à un état haut à l'instant t₀ et reste à l'état haut durant la durée du premier flit. Ce signal « bop » indique que le premier flit est un flit d'en tête. Un deuxième flit, puis un troisième flit sont ensuite envoyés par l'élément émetteur et reçus par l'élément récepteur (le deuxième flit et le troisième flit émis étant représentés respectivement par des portions 222 et 223 de la courbe 220).

A un instant t₁, le signal « accept » 240 émis par l'élément récepteur change d'état, et passe par exemple à un état bas. L'élément récepteur cesse alors de recevoir des données. L'élément émetteur fait une tentative d'envoi d'un quatrième flit (portion 224 de la courbe 220) mais l'élément récepteur ne renvoie pas à l'élément émetteur de signal d'acceptation de ce quatrième flit. Dans un cas, par exemple, où l'élément récepteur est un noeud synchrone, ce noeud peut recevoir et enregistrer le quatrième flit, en attendant de l'utiliser. Dans un autre cas, par exemple, où l'élément récepteur est un noeud asynchrone, ce noeud peut maintenir dans l'élément émetteur le quatrième flit, en n'acquittant pas ce quatrième flit.

A la suite de cette tentative d'envoi, à un instant t₂, l'élément émetteur cesse alors d'envoyer des données (portion 229 de la courbe 220).

L'élément récepteur est à nouveau prêt à recevoir des données à partir d'un instant t₃. Cela est indiqué par le signal « accept » (courbe 210), qui change d'état et passe par exemple à l'état haut. A partir de cet instant t₃, l'élément récepteur indique qu'il accepte alors le quatrième flit. L'élément émetteur peut alors ensuite émettre à nouveau des données. A partir d'un instant t₄, l'élément émet un quatrième flit (portion 225 de la courbe 220) puis un cinquième flit (portion 226 de la courbe 220) qui sont alors reçus par l'élément récepteur. Comme l'indique la courbe 240 représentative d'un signal « eop » (eop pour « end of packet » ou fin de paquet), le cinquième flit marque la fin du paquet et de l'émission de donnée à un instant t₅.

Les paquets de données transitant dans le réseau peuvent être chacun associés à une information de niveau de priorité ou de canal de priorité appelé « canal virtuel » choisi parmi une liste prédéterminée d'au moins deux canaux virtuels différents, par exemple de deux canaux virtuels différents ou de trois canaux virtuels différents. Chaque canal virtuel est relatif à un niveau de priorité ou un numéro de priorité, et confère un degré de priorité à un paquet de données auquel il est associé, notamment en ce qui concerne l'arbitrage de l'ordre de transfert du paquet, lorsque ce paquet parvient en sortie d'une ressource ou lorsque ce paquet parvient à un noeud du réseau.

L'association d'un paquet de données à un canal virtuel, peut être effectuée par une ressource ayant émis ce paquet dans le réseau.

L'information de canal de priorité auquel un paquet de données est susceptible d'être associé, peut être contenue, au moins partiellement, dans des signaux de synchronisation du protocole de synchronisation de type « send/accept » décrit précédemment en liaison avec la figure 2, et notamment, dans les signaux de type « send » accompagnant, l'envoi de groupes de données élémentaire du paquet. Ainsi, un premier paquet associé à un premier canal de priorité, et un deuxième paquet associé à un deuxième canal de priorité différent du premier canal, pourront être accompagnés de signaux de synchronisation, et notamment de signaux de type « send » différents.

Au niveau d'un premier élément du réseau, par exemple une première ressource, un premier paquet de données au sein de cette première ressource et associé par exemple à un premier canal de niveau de priorité donné pourra être transféré en sortie de cette première ressource, prioritairement par rapport à un autre paquet de données dans la première ressource et associé par exemple à un deuxième canal, de niveau de priorité inférieur à celui du premier canal.

Au niveau par exemple d'un premier noeud du réseau, un premier paquet de données accédant à ce premier noeud et associé par exemple à un premier canal, de niveau de priorité donné pourra être transféré en sortie de ce premier noeud, prioritairement par rapport à un autre paquet de données associé par exemple à un deuxième canal, de niveau de priorité inférieur à celui du premier canal, en particulier dans un cas où le premier paquet et l'autre paquet s'apprêtent à accéder à une même sortie du premier noeud.

Dans un cas où, lorsque le premier paquet associé au premier canal accède au premier noeud, tandis qu'un transfert de l'autre paquet associé au deuxième canal a déjà débuté en sortie du premier noeud, le premier paquet pourra être également transféré prioritairement par rapport à l'autre paquet de données.

Selon une possibilité d'implémentation des canaux virtuels, il peut être prévu trois canaux virtuels différents, par exemple un premier canal de niveau de priorité le plus élevé, un deuxième canal de niveau de priorité inférieure à celle du premier canal, et un troisième canal de niveau de priorité inférieure à celle du premier canal et du deuxième canal.

L'association d'un paquet de données à un canal virtuel ou à un canal de priorité peut dépendre notamment du type de données que contient ce paquet.

Le premier canal peut être par exemple réservé à un premier type de données, par exemple à des paquets de données comportant des données d'interruption. Le deuxième canal peut être alors par exemple réservé à un deuxième type de données moins prioritaires que celles du premier type de données, par exemple à des paquets de données comportant des données de programmation ou de configuration du fonctionnement des ressources. Le troisième canal peut être par exemple réservé à un troisième type de données, de priorité inférieure à celle du premier type et du deuxième type, par exemple à des paquets de données comportant des données destinées aux ressources et relatives à des calculs ou à des traitements que ces ressources ont à effectuer.

L'association d'un paquet de données à un canal virtuel ou à un canal de priorité peut également dépendre notamment d'un type de service auquel on souhaite lier ce paquet.

Les canaux virtuels peuvent permettre d'assurer différents services de transferts de données dans le réseau, par exemple au moins un service dit de « best effort » ou « meilleur effort » pour lequel la bande passante ou l'accès au réseau est partagé ou distribué de manière sensiblement équitable entre les ressources, et au moins un service dit de « latence garantie », pour lequel des données associées à ce service sont transférées dans le réseau, par exemple d'une première ressource à une deuxième ressource, selon une durée de transfert, de préférence constante ou variant peu.

Ainsi, pour une implémentation avec deux canaux virtuels, le canal de priorité le plus élevé, par exemple le premier canal, peut être utilisé pour permettre d'assurer un service de latence garantie, tandis que le deuxième canal, de niveau de priorité inférieur à celui du premier canal, peut être utilisé pour permettre d'assurer un service de type « best effort ».

Selon une variante, en suivant l'exemple avec trois canaux virtuels tel que décrit précédemment, le canal de priorité le plus élevé, par exemple le premier canal, peut être utilisé pour permettre d'assurer un service de latence garantie et associé à des paquets de données comportant un type de données prioritaires, par exemple des données d'interruptions. Le deuxième canal et le troisième canal peuvent être utilisés pour permettre d'assurer un service de « best effort », et être associés respectivement, d'une part à des paquets de données comportant un type de données de priorité inférieure à celle du premier canal, par exemple des données de configuration, et d'autre part à des paquets de données comportant un type de données de priorité inférieure à celle du premier canal et du deuxième canal, par exemple des données de calcul.

Il peut être prévu, notamment lorsque des paquets accèdent à un même noeud du réseau, qu'un paquet de données associé à un canal virtuel, par exemple un premier paquet de données associé à un premier canal virtuel, puisse couper un autre paquet de données associé à un autre canal virtuel de niveau de priorité inférieur, par exemple un deuxième paquet de données associé à un deuxième canal de priorité inférieure à celle du premier canal. Ainsi, un cas dans lequel, bien qu'un ou plusieurs flits du deuxième paquet associé au deuxième canal, aient traversé le noeud, un ou plusieurs flits, voire tous les flits du premier paquet associé au premier canal, peuvent traverser le noeud préalablement à ce que le deuxième paquet ait traversé ce même noeud entièrement, peut être prévu.

Il peut être également prévu que deux paquets de données associés à un même canal de priorité, par exemple un premier paquet associé au premier canal et un troisième paquet également associé au premier canal, ne se coupent pas mutuellement, notamment lorsque ces paquets accèdent à un même noeud du réseau.

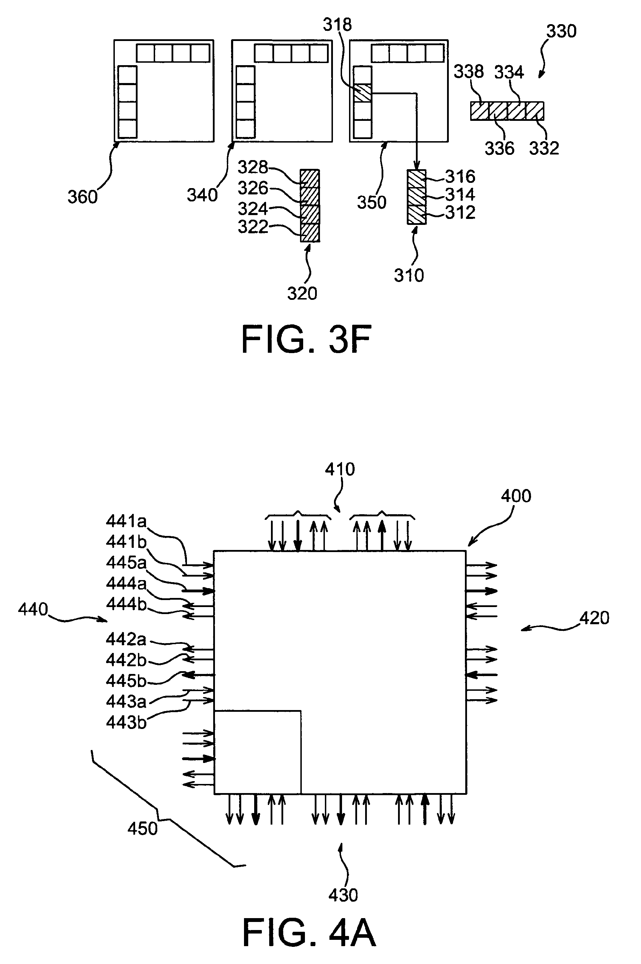

Un exemple de procédé de transmission ou de transfert de données dans un réseau sur puce mis en oeuvre suivant l'invention, va à présent être donné en liaison avec les figures 3A-3F.

Cet ensemble de données est destiné à traverser notamment une portion de réseau comprenant des noeuds 340, 350, 360, dotés chacun de plusieurs entrées, par exemple de 4 entrées, et de plusieurs sorties par exemple de 4 sorties (seule une entrée « nord » et une entrée « est » étant représentées pour chacun de ces noeuds sur les figures 3A-3F).

Ledit ensemble de données comprend notamment un premier paquet 310 de données doté d'un flit d'en-tête 312 suivi d'un deuxième flit 314, puis d'un troisième flit 316, et d'un quatrième flit 318. Cet ensemble de données comprend également un deuxième paquet 320 et un troisième paquet 330 de données, comprenant également chacun un flit d'en-tête noté 322 pour le deuxième paquet 320, et 332 pour le troisième paquet 330, suivi de trois autres flits, respectivement notés 324, 326, 328 pour le deuxième paquet 320, et notés 334, 336, 338, pour le troisième paquet 330.

Le deuxième paquet 320 et le troisième paquet 330 sont associés chacun à un même premier canal virtuel, tandis que le deuxième paquet 320 est associé à un deuxième canal virtuel, de niveau de priorité inférieur à celui dudit premier canal virtuel.

Les trajets respectifs que le premier paquet 310, le deuxième paquet 320, et le troisième paquet 330, sont destinés à emprunter dans cette portion de réseau, sont représentés par des lignes fléchées respectivement notées 311, 321, 331, sur la figure 3A.

Le premier paquet 310 et le deuxième paquet 320 s'apprêtent à accéder à un premier noeud 340 du réseau, et sont destinés à emprunter des sorties différentes de ce premier noeud 340, à destination de liens différents du réseau.

Le premier paquet 310 est notamment destiné à accéder au premier noeud 340 puis à un deuxième noeud 350, voisin du premier noeud 340. Le troisième paquet 330 de données s'apprête quant à lui à accéder à un autre noeud 360, voisin du premier noeud 340, et est ensuite également destiné, à accéder au premier noeud 340, puis au deuxième noeud 350.

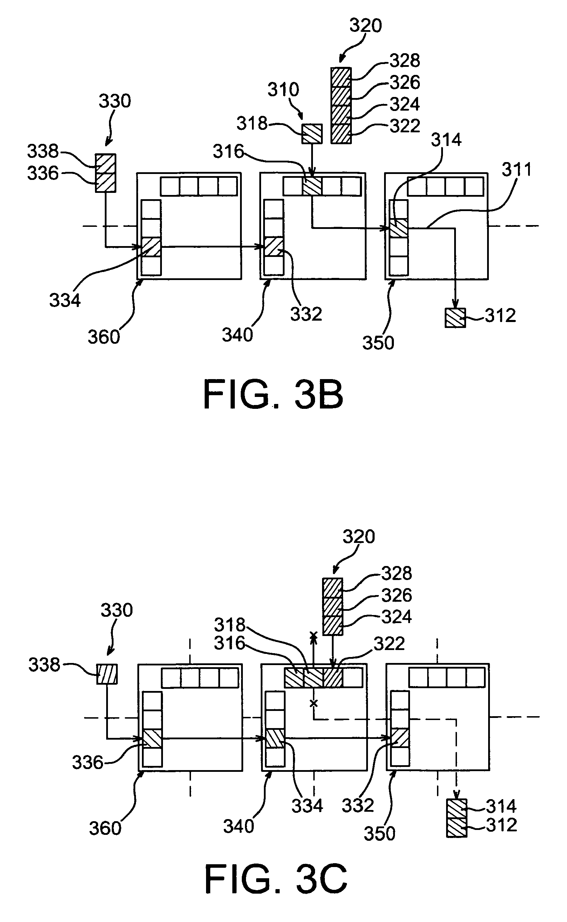

Sur la figure 3B, le transfert du premier paquet 310 et du troisième paquet 330 a débuté, ces derniers ayant déjà accédé au premier noeud 340, tandis que le deuxième paquet 320 s'apprête encore, quant à lui, à accéder à ce premier noeud 340. Un arbitrage, entre le premier paquet 310 et le troisième paquet 330, peut alors être effectué au niveau du premier noeud 340 pour déterminer l'ordre de transfert respectif de ces paquets.

Le flit d'en tête 312 et le deuxième flit 314 du premier paquet 310 ont même déjà traversé le premier noeud 340 et accédé au deuxième noeud 350, tandis que le troisième flit 316 de ce premier paquet 310, a accédé au premier noeud 340 et s'apprête à être transféré en sortie du premier noeud 340, en direction du deuxième noeud 350. Le quatrième flit 318 du premier paquet 310 s'apprête, quant à lui, à accéder au premier noeud 340.

Parallèlement, le troisième paquet 330 et en particulier son flit d'en tête 332, a également déjà accédé au premier noeud 340. Ce flit d'en-tête 332 s'apprête, comme le troisième flit 316 du premier paquet 310, à être transféré en sortie du premier noeud 340, en direction du deuxième noeud 350.

Le flit d'en-tête 332 du troisième paquet 330 et le troisième flit 316 du premier paquet 310 étant destinés vers une même sortie du premier noeud 340, un conflit, entre le premier paquet 310 et le troisième paquet 330, apparaît.

Le troisième paquet 330 étant associé à un canal virtuel de niveau de priorité supérieur à celui du deuxième canal auquel est associé le premier paquet 310, le transfert du premier paquet 310 vers le deuxième noeud 350 est stoppé. Le troisième flit 316 du premier paquet est notamment arrêté (l'arrêt étant signifié par une croix sur la figure 3C). Au niveau du premier noeud 340, l'arrêt peut être accompagné par un passage à un état bas du signal d'acceptation suivant le protocole « send/accept » décrit précédemment en liaison avec la figure 2.

En parallèle (figure 3C), le transfert du troisième paquet 330 se poursuit, de sorte que le flit d'en tête 332 du troisième paquet 330 accède au deuxième noeud 350 et que le deuxième flit 334 du troisième paquet 330 accède quant à lui au premier noeud 340.

Egalement en parallèle, suite à l'arbitrage effectué par le premier noeud 340, le transfert du deuxième paquet 320, se poursuit également (figure 3C), de sorte que le flit d'en-tête 322 du deuxième paquet 320 accède au premier noeud 340.

Bien que le transfert du premier paquet 310 vers le deuxième noeud 350 soit stoppé, le quatrième flit 318 du premier paquet 310 qui, avant l'arbitrage, n'avait pas encore accédé au premier noeud 340, peut également accéder à ce dernier. Le deuxième flit 314 du premier paquet 310, qui, était encore au deuxième noeud 350 avant l'arbitrage, peut quant à lui, se déplacer et sortir du deuxième noeud 350 (le déplacement du deuxième flit étant signifié sur la figure 3C par une flèche devant un bloc référencé 314).

Le premier paquet 310 est ainsi « coupé » en deux parties par le troisième paquet 330, de canal de priorité supérieur. Ainsi, une partie du troisième paquet 330 se trouve dans le premier noeud 340, tandis qu'une autre partie se trouve dans un autre lien ou dans un autre noeud (non représenté sur la figure 3C) qui n'est pas voisin du premier noeud 340.

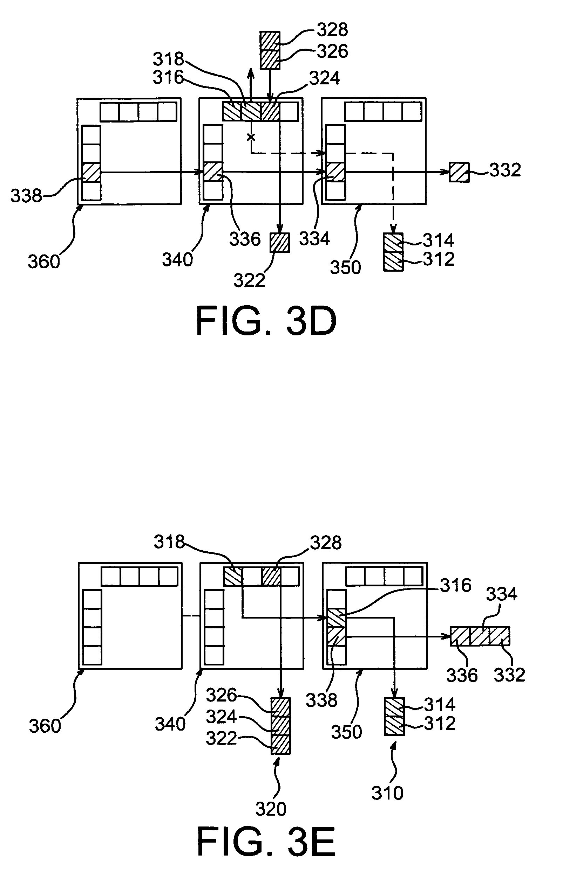

Le deuxième paquet 320 et le troisième paquet 330 étant destinés à accéder à des noeuds différents en sortie du premier noeud 340, ces paquets ne rentrent pas en conflit. Le transfert respectif du deuxième paquet 320 et du troisième paquet 330 peut alors se poursuivre, lors d'une étape illustrée sur la figure 3D. Parallèlement, le transfert du premier paquet 310 en sortie du premier noeud 340 et à destination du deuxième noeud 340, est toujours arrêté ou stoppé.

En ce qui concerne le deuxième paquet 320, lors de cette étape, le deuxième flit 324 de ce deuxième paquet 320 accède au premier noeud 340, tandis que le flit d'en tête 322 est transféré en sortie de ce premier noeud 340.

En ce qui concerne le déplacement du troisième paquet 330, le flit d'en tête 332 du troisième paquet 330 est sorti du deuxième noeud 350, tandis que le deuxième flit 334 du troisième paquet 330 est sorti du premier noeud 340 et accède au deuxième noeud 350 et que le troisième flit 336 accède au premier noeud 340 (figure 3D).

Ensuite, le troisième paquet 330 sort intégralement du premier noeud 340, et libère la sortie pour laquelle il était en conflit avec le deuxième paquet 320. Après cela, lors d'une étape illustrée sur la figure 3E, le transfert du deuxième paquet 320 en sortie du premier noeud 340, peut reprendre. Un flit 316 du premier paquet 310 accède alors au deuxième noeud 350. Parallèlement, le déplacement du troisième paquet 330 se prolonge. Le quatrième flit 338 et dernier flit du troisième paquet a déjà accédé au deuxième noeud 350.

Selon une étape illustrée sur la figure 4F, le transfert du premier paquet 310 en sortie du premier noeud 340 s'est achevé après celui du deuxième paquet 320 et du troisième paquet 330. Ce premier paquet 310 a été transféré entièrement en sortie du premier noeud 340, et peut avoir accédé entièrement au deuxième noeud 350. Le transfert du deuxième paquet 320 en sortie du premier noeud 340 est également achevé. Quant au transfert du troisième paquet 330 en sortie du deuxième noeud 350, celui-ci est également achevé.

Un exemple de noeud 400 d'un réseau sur puce mis en oeuvre suivant l'invention, va à présent être décrit en liaison avec les figures 4A-4C. Ce noeud peut être doté d'une horloge propre (non représentée), indépendante de celles des autres noeuds dudit réseau.

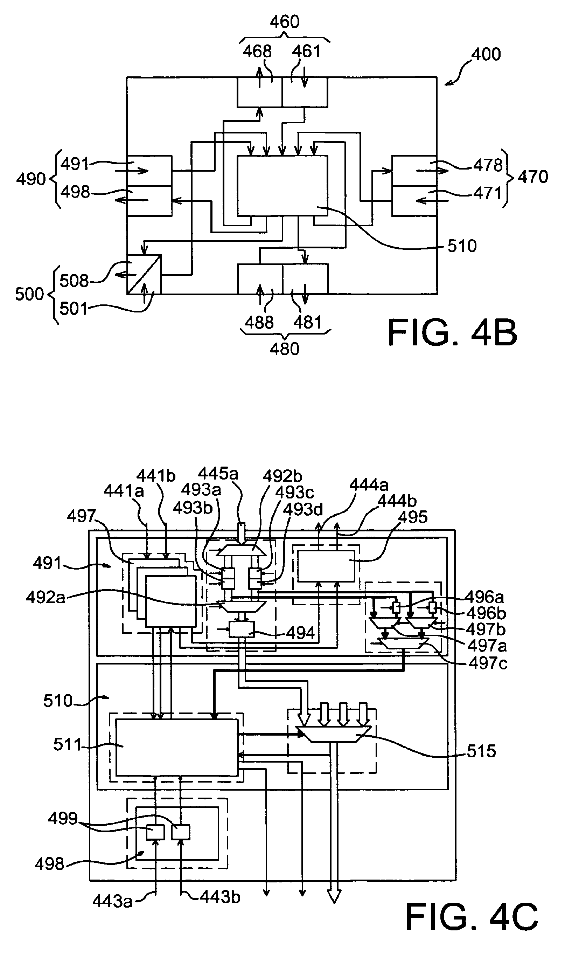

Ce noeud 400 comprend cinq unités d'entrées/sorties 410, 420, 430, 440, 450, (représentées sur la figure 4A) reliées chacune respectivement à un module d'entrées/sorties 460, 470, 480, 490, 500 (représentés sur la figure 4B).

Parmi les unités d'entrées/sorties figurent une unité « nord » 410, une unité « est » 420, une unité « sud » 430, une unité « ouest » 440, chacune respectivement apte à être reliée à un autre noeud du réseau, voisin du noeud 400 (les autres noeuds n'étant pas représentés sur les figures 4A-4C) et prévue pour effectuer des échanges de données et/ou de signaux de synchronisation avec cet autre noeud.

Une autre unité d'entrées/sorties 450 du noeud 400, est quant à elle apte à être reliée à une ressource (non représentée sur les figures 4A-4C) du réseau et prévue pour effectuer des échanges de données et/ou de signaux de synchronisation avec cette ressource.

Chacune des unités d'entrées/sorties du noeud 400, peut, à l'image de l'unité « ouest » 440 représentée plus en détail sur la figure 4A, comprendre :
- une ou plusieurs entrées, par exemple deux entrées 441a, 441b, reliées à leur module d'entrée respectif (les modules d'entrées/sorties et en particulier le module d'entrées/sorties « ouest » n'étant pas représenté sur cette figure) et prévues pour recevoir des signaux de synchronisation de type « send » suivant un protocole de type « send/accept dont un mécanisme de fonctionnement à été décrit plus haut » en liaison avec la figure 2, provenant d'un autre noeud (non représenté) du réseau, voisin du noeud 400,
- au moins une entrée 445a reliée à son module respectif d'entrées/sorties, et prévue pour recevoir des données ou flits dudit autre noeud,
- une ou plusieurs sorties, par exemple deux sorties 444a, 444b, reliées à leur module respectif d'entrées/sorties, et prévues pour émettre des signaux de synchronisation de type « accept » suivant le même protocole « send/accept », en direction dudit autre noeud (non représenté) du réseau,
- une ou plusieurs sorties, par exemple deux sorties 442a, 442b, reliées à leur module respectif d'entrées/sorties, et prévues pour émettre des signaux de synchronisation de type « send » suivant le même protocole « send/accept », en direction dudit autre noeud voisin du réseau.
- au moins une sortie 445b, reliée à son module d'entrées/sorties respectif et prévue pour recevoir des données ou flits dudit autre noeud.
- une ou plusieurs entrées, par exemple deux entrées 443a, 443b, reliées à leur module de sortie respectif, et prévues pour recevoir des signaux de synchronisation de type « accept » suivant le même protocole « send/accept », provenant d'un autre noeud (non représenté) du réseau.

Sur la figure 4B, le noeud 400 est cette fois représenté avec ses cinq modules d'entrées/sorties 460, 470, 480, 490, 500, et un module central 510 auquel chacun de ces modules d'entrées/sorties est relié. Des lignes fléchées sur cette figure 4B, représentent des trajets que des données ou des flits transitant par le noeud 400, sont susceptibles d'adopter au sein de ce dernier.

Parmi les modules d'entrées/sorties, figure un module « nord » 460 doté d'un module d'entrée « nord » 461 et d'un module de sortie « nord » 468, un module « est » 470 doté d'un module d'entrée « est » 471 et d'un module de sortie « est » 478, un module « sud » 480 doté d'un module d'entrée « sud » 481 et d'un module de sortie « sud » 488, un module « ouest » 490, un autre module 500 doté d'un module d'entrée 501 et d'un module de sortie 508. Les cinq modules d'entrées/sorties 460, 470, 480, 490, 500, sont respectivement reliés à une l'unité d'entrées/sorties « nord » 410, l'unité d'entrées/sorties « est » 420, l'unité d'entrées/sorties « sud » 430, l'unité d'entrées/sorties « ouest » 440 (les unités d'entrées/sorties n'étant pas représentées sur la figure 4B).

Le module central 510 associé aux modules d'entrées/sorties 460, 470, 480, 490, 500, permet notamment de produire ou de traiter des signaux de synchronisation de type « send » ou/et de type « accept » en direction ou en provenance d'autres noeuds voisin du noeud 400. Le module central 510 peut permettre également d'effectuer un routage de paquets de données parvenant au noeud 400, en déterminant la sortie respective du noeud 400 par laquelle chacun de ces paquets est destiné à être transféré.

Le routage d'un paquet de données parvenant au noeud 400 peut être effectué par ce noeud 400, comme il a été décrit plus haut, en fonction d'informations de routage, susceptibles d'être sous forme d'une liste ordonnée de données de directions que le paquet est destiné à emprunter dans le réseau.

Ces informations de routage peuvent être comprises uniquement dans l'en tête dudit paquet. Ainsi, le noeud 400, est susceptible de conserver les informations de routage du paquet, tant qu'une information ou un signal de fin paquet « eop » ne lui est pas parvenu. Après avoir récupéré dans un paquet, des informations de routage spécifiques le concernant, le noeud 400 peut éventuellement supprimer ces informations de routage spécifiques.

Le noeud 400 est mis en oeuvre pour, lorsqu'il reçoit un paquet de données, lire ou décoder certaines des informations de routage, par exemple la donnée de direction située à la fin de la liste ordonnée de données de directions, puis modifier la liste ordonnée de directions, afin notamment de préparer le routage pour un noeud voisin, situé après le noeud 400 dans le trajet dudit paquet. Cette préparation peut être effectuée, comme cela a été décrit plus haut, par décalage de la liste ordonnée de données de directions.

Le module central 510 du noeud 400 peut permettre également d'effectuer un arbitrage de données, en déterminant un ordre de transfert entre plusieurs flits ou paquets de flits lui parvenant.

L'arbitrage entre plusieurs paquets de données est quant à lui, comme cela a été décrit auparavant, effectué au moins en partie fonction des canaux virtuels respectifs auxquels sont associés ces paquets de données. Une différenciation entre canaux de priorité peut être mise en oeuvre par le module central 510, par exemple par association de signaux de synchronisation « send/accept » différent pour chaque canal virtuel.

L'ordre de transfert entre plusieurs paquets de données, lorsque ces paquets sont associés à des canaux des priorités différents, peut être déterminé uniquement en fonction de leurs canaux virtuels respectifs.

L'ordre de transfert entre plusieurs paquets de données, lorsque certains de ces paquets sont associés à des canaux des priorités identiques, peut être en complément, déterminé à l'aide d'un arbitrage « dynamique ». Pour un tel type d'arbitrage, l'ordre d'arrivée respectif desdits paquets en entrée du noeud 400 est également pris en compte. Cet arbitrage dynamique peut être par exemple de type « premier arrivé premier servi », et peut être effectué par le noeud 400 notamment, par exemple, pour déterminer l'ordre de transfert entre plusieurs paquets de données lui parvenant et associés à un même canal de priorité.

Un ordre de transfert au moyen d'un arbitrage de type « statique », peut être également éventuellement employé par le noeud 400, en complément de celui effectué à l'aide des canaux virtuels. Pour un tel type d'arbitrage, le noeud 400 prend en compte de quel noeud voisin proviennent respectivement lesdits paquets de données ou de laquelle de ses entrées sont respectivement parvenus les paquets. Ce type d'arbitrage statique peut être employé notamment en complément de l'arbitrage effectué à l'aide des canaux virtuels, par exemple, pour déterminer l'ordre de transfert entre plusieurs paquets différents associés à un même canal virtuel et arrivant simultanément ou sensiblement en même temps au noeud 400.

Un tel arbitrage statique peut être par exemple de type « nord/est/sud/ouest », pour lequel un paquet provenant de l'entrée « nord » du noeud 400 est prioritaire par rapport à un deuxième paquet de même canal virtuel arrivant en même temps que le premier paquet à l'entrée « est » du noeud 400, le deuxième paquet étant lui-même prioritaire par rapport à un troisième paquet de même canal virtuel arrivant en même temps que le deuxième paquet à l'entrée « sud » du noeud 400.

Un fonctionnement possible du noeud 400 peut être le suivant : à l'arrivée d'un flit d'en-tête d'un premier paquet de données par une entrée du noeud 400, la sortie du noeud 400 que ce premier paquet est destiné à emprunter, est déterminée en fonction des informations de routages comprises dans l'en-tête dudit premier paquet. Une fonction d'arbitrage est ensuite activée.

Dans un cas où il n'y a pas de conflit sur ladite sortie, et que par exemple aucun autre paquet n'emprunte cette sortie ou ne s'apprête à emprunter cette sortie, le premier paquet est transmis ou transféré vers cette sortie.

Dans un cas où il y a un conflit d'accès sur ladite sortie, et que par exemple, un deuxième paquet du même canal virtuel que le premier paquet, ou d'un canal virtuel de niveau de priorité supérieur à celui du premier paquet, emprunte déjà cette sortie, le transfert du premier paquet en sortie du noeud 400 est bloqué ou stoppé. Un signal de synchronisation de type « accept » est mis à l'état bas et transmis au noeud voisin du noeud 400, duquel provient le premier paquet. Le transfert du premier paquet peut reprendre quand tous les flits dudit deuxième paquet ont traversé le noeud 400.

Dans un autre cas où il y a un conflit sur ladite sortie, et que par exemple, un autre flit d'en tête d'un deuxième paquet appartenant au même canal virtuel que le premier paquet s'apprête à emprunter cette sortie en même temps, un arbitrage statique, par exemple de type « nord », « est », « sud », « ouest », est réalisé entre le premier paquet et le deuxième paquet.

Dans un cas, où il y a un conflit sur ladite sortie, et qu'un deuxième paquet appartenant à un canal virtuel de niveau de priorité inférieur à celui du premier paquet, emprunte déjà cette sortie, le transfert de ce deuxième paquet en sortie du noeud 400 est bloqué. Le premier paquet est alors transféré intégralement en sortie du noeud 400. Le transfert dudit deuxième paquet peut éventuellement reprendre ensuite.

Si un ou plusieurs autres paquets, associés respectivement à un canal de priorité supérieure à celle du canal dudit deuxième paquet, accède en entrée du noeud 400 avant que l'intégralité dudit deuxième paquet ait été transférée en sortie du noeud 400, et que ces autres paquets sont destinés à emprunter la même sortie que le deuxième paquet, lesdits autres paquets sont transférés intégralement en sortie du noeud 400 prioritairement par rapport au deuxième paquet.

Si lesdits autres paquets sont associés à un canal de priorité supérieur à celui du canal de priorité dudit premier paquet, et que ces autres paquets accèdent en entrée du noeud 400 avant que l'intégralité dudit premier paquet ait été transférée en sortie du noeud 400, et que ces autres paquets sont destinés à emprunter la même sortie que le premier paquet, lesdits autres paquets sont transférés intégralement en sortie du noeud 400 avant le premier paquet.

Une structure du module de centre 510 du noeud 400 et d'un module d'entrées/sorties, par exemple le module « ouest » 490 du noeud 400 est représentée sur la figure 4C.

Le module d'entrées/sorties « ouest » 490 comprend un module d'entrée 491 auquel sont reliées les entrées 441a et 441b prévues pour recevoir des signaux de synchronisation de type « send », provenant d'un autre noeud (non représenté), voisin du noeud 400.

Le module d'entrée 491 est également relié à l'entrée 445a, prévue quant à elle pour recevoir des flits provenant dudit autre noeud. Le module d'entrée 491 est également relié aux sorties 444a et 444b, prévues pour recevoir des signaux de synchronisation de type « accept » provenant dudit autre noeud voisin. Dans cet exemple, avec deux entrées 441a et 441b, et deux sorties 444a et 444b, pour recevoir et émettre des signaux de synchronisation suivant, le protocole asynchrone « send/accept » un canal virtuel choisi parmi deux canaux virtuels différents peut être attribué aux paquets.

Le module d'entrée 491 comporte des multiplexeurs 492a, 492b, des mémoires tampons, par exemple sous forme d'unités FIFOs 493a-493b, et 493c-493d, (FIFO pour « first in first out » pour « premier entré premier sorti »). Ces FIFO 493a-493b, et 493c-493d, permettent un fonctionnement sans à coups du mécanisme de synchronisation montré plus haut. Une unité 494 permet d'effectuer un décalage, tel que décrit plus haut, des informations de routage d'un paquet, et en particulier le décalage de la liste ordonnée de données de direction contenue dans ces informations de routage.

Le module d'entrée 490 est également doté de moyens 497 jouant rôle de machine d'état, et permettant notamment, de gérer l'ordonnancement des paquets en entrée et les éventuelles coupures de paquets, ce à l'aide du taux de remplissage des FIFO 493a-493b, et 493c-493d.

Des moyens 495 de calcul combinatoire, sont prévus pour produire des signaux de type « accept » à destination de l'autre noeud voisin, en fonction de la machine d'état.

Le module d'entrée 490 est également doté de moyens 496a, 496b, pour mémoriser des paquets de données entrants, et notamment pour mémoriser les informations de routage relatives à ces paquets, et de moyens 497a, 497b, 497c, par exemple des multiplexeurs pour sélectionner, pour un paquet entrant, un chemin en fonction de signaux de synchronisation de type « send » et du bit « bop » de début de paquet associés à ce paquet.

Un module permettant un interfaçage (non représenté sur la figure 4C ) entre des signaux synchrones internes au noeud et des signaux asynchrones par exemple de type « send » et/ou de type « accept » provenant d'un autre noeud peut être également prévu.

Selon une possibilité, un tel module peut être par exemple doté de FIFOS et d'horloges de re-synchronisation.

Selon une autre possibilité, un tel module peut comprendre une interface telle que décrite dans le document : Simon Moore et al., « Point to point GALS Interconnect », Proceedings of ASYNC 2002, p 69-75*.* Ce module peut permettre de garantir l'intégrité des données entrant dans le noeud.

Un tel module d'interfaçage peut être également éventuellement présent dans une ressource (non représentée) à laquelle le noeud 400 est associé.

Le module d'entrées/sorties « ouest » 490 comprend également un module de sortie 498, doté de moyens, par exemple de deux mémoires tampons 499, prévus pour retarder des signaux de type « d'accept » en provenance d'un noeud voisin du noeud 400. Un module (non représenté sur la figure 4C) permettant un interfaçage entre des signaux synchrones internes au noeud et des signaux asynchrones peut être également intégré au module de sortie 498.

Le module de centre 510, comprend quant à lui, des moyens 511 d'arbitrage et d'aiguillage de données, dont le fonctionnement peut être tel que décrit plus haut. Les moyens 511 d'arbitrage et d'aiguillage de données, commandent des moyens de multiplexage 513, pour diriger des données entrantes dans le noeud 400, vers l'un des modules de d'entrées/sortie de ce noeud.

Le noeud 400 qui vient d'être décrit peut être implémenté en logique synchrone, par exemple dans une technologie « HCMOS9 » de chez ST Microelectronics. Un tel noeud 400 peut avoir une fréquence de fonctionnement élevée, par exemple de l'ordre de 200 MHz.

Le nombre de registres de mémoires nécessaires pour réaliser une tel noeud peut être réduit, par exemple de 20 registres de 32 bits pour les FIFOS des modules d'entrées 461, 471, 481, 491, 501, et de 10 registres de 2 bits pour l'enregistrement des informations de routage. Ce faible nombre de registres peut entraîner une consommation du noeud 400 réduite, et une consommation globale réduite pour un réseau doté de noeuds du type du noeud 400, par rapport aux dispositifs de l'art antérieur.

Selon une variante de mise en oeuvre du noeud 400 précédemment décrit, ce dernier peut être réalisé sans horloge.

Le noeud 400 précédemment décrit, peut avoir un fonctionnement interne asynchrone et être implémenté par exemple à l'aide d'un PivotPoint^{™} de la société FULCRUM. Dans ce cas le noeud peut être prévu pour échanger avec d'autres noeuds du réseau ou avec une ressource, à l'aide d'un protocole de synchronisation quatre phases.

## Revendications

1. Procédé de transmission de données dans un réseau sur puce formé d'une pluralité d'éléments aptes à communiquer entre eux, la pluralité d'éléments comportant une pluralité de ressources (110, 114a, 114b) aptes à effectuer des traitements de données, et une pluralité de noeuds (120, 400) aptes à relier des ressources entre elles et à réaliser un aiguillage des données dans le réseau, chaque noeud étant doté d'une pluralité d'entrées et d'une pluralité de sorties, le procédé comprenant :
- au moins une étape de transfert au moyen d'un protocole de communication asynchrone, d'un élément émetteur (114a) du réseau vers un élément récepteur (114b) du réseau, d'au moins un paquet de données (310, 320, 330) associé à une information de priorité ou de canal de priorité, parmi un ensemble de plusieurs canaux de priorité différents et comportant un ou plusieurs groupes élémentaires (312, 314, 316, 318, 322, 324, 326, 328, 332, 334, 336, 338) de données, le transfert d'un ou de plusieurs groupes de données élémentaires, ou de tous les groupes élémentaires de données dudit paquet, étant accompagné par un envoi ou associé à un envoi, par le premier élément, d'au moins un signal d'un premier type suivant ledit protocole, et autorisé par le deuxième élément par un envoi, par le deuxième élément, en réponse au signal du premier type, d'au moins un autre signal d'un deuxième type suivant ledit protocole, **caractérisé en ce que** ledit signal du premier type suivant ledit protocole de communication asynchrone, comporte au moins partiellement l'information de priorité ou de canal de priorité dudit paquet.

2. Procédé de transmission de données dans un réseau sur puce selon la revendication 1, le procédé comprenant en outre :
a) l'association par une ressource respective du réseau, de données de priorité ou d'un canal de priorité, à au moins un premier paquet (310) de données, d'autres données de priorité ou d'un autre canal de priorité à au moins un deuxième paquet (320) de données,
b) au moins un arbitrage par au moins un premier élément du réseau d'un ordre de transfert en sortie du premier élément entre le premier paquet de données et le deuxième paquet de données, l'ordre de transfert étant déterminé au moins en partie en fonction du canal de priorité respectif auquel le premier paquet et le deuxième paquet ont été associés.

3. Procédé de transmission de données selon la revendication 2, dans lequel le premier élément est un premier noeud (340) et dans lequel le premier paquet (310) de données et le deuxième paquet (320) de données ont été associés respectivement à un premier canal de priorité de niveau de priorité donné, et à un deuxième canal de priorité, de niveau de priorité différent de celui du premier canal, un premier groupe de données du premier paquet de données et un autre groupe de données du deuxième paquet ayant accédé au premier noeud et s'apprêtant à accéder à une sortie ou à une même sortie du premier noeud, et lors de l'étape b), l'ordre de transfert entre le premier paquet et le deuxième paquet étant déterminé uniquement en fonction du niveau de priorité respectif du premier canal et du deuxième canal.

4. Procédé de transmission de données selon la revendication 2 ou 3, dans lequel le premier élément est un premier noeud (340) et dans lequel le premier paquet (310) de données et le deuxième paquet (320) de données ont été associés respectivement à un premier canal de priorité, et à un deuxième canal de priorité, de niveau de priorité inférieur à celui du premier canal, un premier groupe de données du premier paquet et un autre groupe de données du deuxième paquet ayant accédé au premier noeud et s'apprêtant à accéder à une sortie ou à une même sortie du premier noeud, le procédé comprenant en outre après l'étape b) :
c) le transfert, en sortie du premier noeud du premier paquet de données,
d) le transfert, en sortie du premier noeud, du deuxième paquet de données après que l'intégralité du premier paquet ait été transféré en sortie du premier noeud.

5. Procédé de transmission de données selon la revendication 4, comprenant en outre, après l'étape b) et avant l'étape d) :
- l'arrêt au niveau du premier noeud, au moins partiel, du deuxième paquet.

6. Procédé de transmission de données selon la revendication 4 ou 5, dans lequel, avant l'étape b), le transfert du deuxième paquet en sortie du premier noeud a déjà débuté, et au moins un deuxième groupe de données du deuxième paquet a déjà été transféré en sortie du premier noeud et/ou est déjà sorti du premier noeud, tandis qu'aucune donnée du premier paquet de données n'a encore été transféré en sortie du premier noeud et/ou n'est déjà sorti du premier noeud, comprenant en outre, après l'étape b) et préalablement à l'étape d), et éventuellement pendant un arrêt partiel du deuxième paquet de données :
- l'arrêt dudit autre groupe de données du deuxième paquet,
- le déplacement ou transfert dans le réseau dudit deuxième groupe de données du deuxième paquet.

7. Procédé de transmission de données selon les revendications 4 à 6, dans lequel, avant l'étape b), au moins un troisième groupe de données du deuxième paquet (320) n'a pas encore accédé au premier noeud (340), comprenant en outre, après l'étape b) et préalablement à l'étape d), et éventuellement pendant un arrêt partiel du deuxième paquet de données :
- le transfert en entrée du premier noeud d'au moins une partie des données du troisième groupe de données du deuxième paquet.

8. Procédé de transmission de données selon l'une des revendications 5 à 7, dans lequel, après l'étape b) et préalablement à l'étape d), au moins un troisième paquet (330) de données associé à un canal de niveau de priorité supérieur à celui du deuxième canal, accède au premier noeud et s'apprête à accéder à ladite sortie du premier noeud, le procédé comprenant en outre :
- le transfert en sortie du premier noeud (310), de l'intégralité dudit troisième paquet, préalablement à l'étape d).

9. Procédé de transmission de données selon la revendication 8, dans lequel, le troisième paquet (330) est associé à un canal de niveau de priorité égal à celui du premier canal, ledit transfert en sortie du premier noeud, de l' intégralité dudit troisième paquet étant réalisé après l'étape c) et préalablement à l'étape d).

10. Procédé de transmission de données selon la revendication 8, dans lequel, le troisième paquet est associé à un canal de niveau de priorité supérieur à celui du premier canal, ledit transfert en sortie du premier noeud, de l'intégralité dudit troisième paquet étant réalisé préalablement à l'étape c).

11. Procédé de transmission de données selon la revendication 2, dans lequel à l'étape a), le premier élément est un premier noeud et dans lequel le premier paquet de données et le deuxième paquet de données sont respectivement associés à un même canal de priorité, l'arbitrage de l'ordre de transfert étant déterminé en outre en fonction de l'ordre d'arrivée respectif au premier noeud, du premier paquet et du deuxième paquet ou/et en fonction de l'entrée du premier noeud par laquelle, le premier paquet et le deuxième paquet ont respectivement accédé à ce premier noeud.

12. Procédé de transmission de données selon la revendication 11, dans lequel préalablement à l'étape b), un premier groupe de données du premier paquet (310) de données et un autre groupe de données de données du deuxième paquet (320) ont déjà accédé au premier noeud et s'apprêtent à accéder à une sortie ou à une même sortie du premier noeud, et dans lequel à l'étape b), un deuxième groupe de données du deuxième paquet de données a déjà été transféré en sortie du premier noeud ou est déjà sorti du premier noeud, comprenant en outre après l'étape b) :
e) le transfert du deuxième paquet de données en sortie du premier noeud,
f) le transfert du premier paquet de données en sortie du premier noeud après que l'intégralité du deuxième paquet ait été transférée en sortie du premier noeud.

13. Procédé de transmission de données selon l'une des revendications 11 ou 12, dans lequel, au moins un troisième paquet de données associé à un canal de niveau de priorité supérieur au niveau de priorité du canal auquel le premier paquet et le deuxième paquet sont chacun associés, accède au premier noeud après l'étape b) et préalablement à l'étape e), et s'apprête à accéder à ladite sortie du premier noeud comprenant en outre :
- le transfert en sortie du premier noeud, de l'intégralité dudit troisième paquet, préalablement à l'étape e).

14. Procédé de transmission de données selon la revendication 13, dans lequel le troisième paquet de données accède au premier noeud préalablement à l'étape a) ou pendant l'étape c), comprenant outre :
- le transfert en sortie du premier noeud, de l'intégralité dudit troisième paquet, préalablement à l'étape f).

15. Procédé de transmission de données selon l'une des revendication 2 à 14, dans lequel le premier paquet et le deuxième paquet sont respectivement destinés à emprunter un premier trajet dans le réseau, et un second trajet dans le réseau, de procédé comprenant préalablement à l'étape b) :
- la détermination du premier trajet et du deuxième trajet.

16. Procédé de transmission de données selon la revendication 15, comprenant en outre préalablement à l'étape b) :
- l'affectation au premier paquet (310), de données relatives au premier trajet, et au deuxième paquet (320), de données relatives au deuxième trajet, par une ressource respective du réseau.

17. Procédé de transmission de données selon l'une des revendications 2 à 16, l'association du premier paquet (310) de données à un canal de priorité, et du deuxième paquet (320) de données à un canal de priorité, étant effectuée en fonction du type de données que comporte(nt) respectivement ledit premier paquet et ledit deuxième paquet.

18. Procédé de transfert de données dans un réseau sur puce selon l'une des revendications 1 à 17, au moins un élément du réseau étant régi par une première horloge.

19. Procédé de transfert de données dans un réseau sur puce selon la revendication 18, un ou plusieurs autres éléments du réseau étant régis respectivement par une horloge différente de la première horloge ou par une horloge qui n'est pas synchrone avec la première horloge.

20. Procédé de transfert de données dans un réseau sur puce selon l'une des revendications 1 à 19, un ou plusieurs éléments n'étant pas régis par une horloge ou étant dépourvus d'horloge.

21. Dispositif de réseau sur puce comprenant une pluralité d'éléments aptes à communiquer entre eux, dont une pluralité de ressources (110, 114a, 114b) aptes à effectuer des traitements de données, et un ou plusieurs noeuds (120, 400) dotés d'une ou plusieurs entrées et d'une ou plusieurs sorties, aptes à réaliser un aiguillage de données, au moins deux éléments du réseau sur puce comprenant :
- des moyens d'émission de données, aptes à émettre des données sous forme de paquets associés respectivement à une information de niveau de priorité ou de canal de priorité et comportant un ou plusieurs groupes élémentaires de données,
- des moyens de réception de données, aptes à recevoir des données sous forme de paquets comportant un ou plusieurs groupes élémentaires de données,
- des moyens d'émission de signaux de synchronisation suivant un protocole de communication asynchrone, aptes à émettre au moins un signal d'un premier type, accompagnant un envoi d'un groupe élémentaire de données ou associé à un envoi d'un groupe élémentaire de données,
- des moyens de réception de signaux de synchronisation suivant ledit protocole de communication asynchrone, aptes à recevoir au moins un signal d'un deuxième type, préalablement à une réception d'un groupe élémentaire de données, le dispositif comportant en outre :
- des moyens pour autoriser l'émission d'un groupe élémentaire de données d'un paquet suite à la réception d'un signal du deuxième type, et pour autoriser la réception d'un groupe élémentaire de données d'un paquet suite à la réception d'un signal du premier type,
**caractérisé en ce que** ledit signal du premier type accompagnant un envoi ou associé à un envoi d'un groupe élémentaire de données d'un paquet comporte au moins partiellement l'information de niveau de priorité ou de canal de priorité auquel ledit paquet est associé.

22. Dispositif de réseau sur puce selon la revendication 21, comprenant en outre :
- au moins une première ressource (110a) comportant des moyens d'association de priorité, aptes à associer, à au moins un paquet de données que cette ressource est destinée à émettre, au moins un canal de priorité choisi parmi un ensemble prédéterminé de canaux de priorité,
- au moins un premier élément (124) comprenant en outre : des moyens d'arbitrage, aptes à déterminer un ordre de transfert en sortie du premier élément entre au moins un premier paquet (310) associé à un canal de priorité et au moins un deuxième paquet de données associé à un canal de priorité, l'ordre de transfert étant déterminé au moins en fonction d'un canal ou de canaux respectif(s) de priorité au(x)quel(s) le premier paquet et le deuxième paquet (320) ont été associés par une ressource respective du réseau.

23. Dispositif de réseau sur puce selon la revendication 22, dans lequel premier élément est un premier noeud (124) dans lequel le premier paquet et le deuxième paquet sont associés respectivement à un premier canal de priorité, et à un deuxième canal de priorité différent du premier canal, les moyens d'arbitrage étant aptes en outre à déterminer l'ordre de transfert entre le premier paquet et le deuxième paquet uniquement en fonction des canaux respectifs auxquels le premier paquet et le deuxième paquet sont respectivement associés.

24. Dispositif de réseau sur puce selon la revendication 22, dans lequel premier élément est un premier noeud (124), le premier paquet et le deuxième paquet sont associés à un même canal de priorité, les moyens d'arbitrage, étant aptes en outre à déterminer l'ordre de transfert entre le premier paquet et le deuxième paquet en fonction de l'ordre d'arrivée respectif en entrée du premier noeud au(x)quel(s) le premier et le deuxième paquet sont parvenus au premier noeud.

25. Dispositif de réseau sur puce selon la revendication 24, les moyens d'arbitrage, étant aptes en outre à déterminer l'ordre de transfert entre le premier paquet et le deuxième paquet en fonction de l'entrée respective du premier noeud par laquelle le premier paquet et le deuxième paquet sont parvenus au premier noeud.

26. Dispositif de réseau sur puce selon l'une des revendications 22 à 25, la première ressource comprenant en outre :
- des moyens d'affectation de données de trajet, aptes à affecter à au moins un paquet de données que la première ressource (114a) est destinée à émettre, des données relatives au trajet que ce paquet est destiné à emprunter dans le réseau.

27. Dispositif de réseau sur puce selon la revendication 26, dans lequel le premier élément est un premier noeud (124) et dans lequel le premier paquet et le deuxième paquet de données ont été associés respectivement à des premières données de trajet et à des deuxièmes données de trajet, par une ressource respective du réseau, le premier noeud comprenant en outre :
- des moyens de routage de données, apte à effectuer un routage dudit premier paquet et dudit deuxième paquet au moins partiellement ou totalement en fonction de données de trajets respectives auxquelles le premier paquet et le deuxième paquet ont été associés respectivement par une ressource du réseau.

28. Dispositif de réseau sur puce selon la revendication 27, le premier noeud comprenant en outre : des moyens de mémorisation de données trajet.

29. Dispositif de réseau sur puce selon l'une des revendications 22 à 28, les moyens d'association de priorité, étant aptes à associer, à au moins un paquet de données que cette première ressource est destinée à émette, au moins un canal de priorité choisi parmi un ensemble prédéterminé de canaux de priorité, en fonction du type de données que comporte ce paquet.

30. Dispositif de réseau sur puce, selon l'une des revendications 21 à 29, dans lequel au moins un desdits éléments du réseau est régi par une première horloge.

31. Dispositif de réseau sur puce, selon la revendication 30, au moins un autre élément parmi lesdits éléments étant régi par une deuxième horloge, différente de la première horloge ou qui n'est pas synchrone avec la première horloge.

32. Dispositif de réseau sur puce, selon l'une des revendications 21 à 31, au moins un desdits éléments du réseau n'étant pas régi par une horloge ou étant dépourvu d'horloge.

## Claims

1. Method of transmitting data in a network on chip formed from a plurality of elements capable of communicating with each other, the plurality of elements comprising a plurality of resources (110, 114a, 114b) capable of processing data, and a plurality of nodes (120, 400) capable of connecting resources to each other and switching data in the network, each node being provided with a plurality of inputs and a plurality of outputs, the method comprising:
- at least one transfer step using an asynchronous communication protocol, of at least one data packet (310, 320, 330) associated with priority or priority channel information chosen among a set of several different priority channels and comprising one or several elementary groups of data (312, 314, 316, 318, 322, 324, 326, 328, 332, 334, 336, 338), from a sending element (114a) in the network to a receiving element (114b) in the network, the transfer of one or several elementary data groups or all of the elementary data groups of said packet, being accompanied by or associated with, a sending, by the first element of at least one signal of a first type according to said protocol, and being authorized by the second element sending at least one other second type of signal according to said protocol, in response to the signal of the first type, **characterized in that** said first type of signal according to said asynchronous communication protocol at least partly comprising the priority or priority channel information with which said packet is associated.

2. Method of transmitting data in a network on chip network according to claim 1, the method also comprising:
a) association, by a resource of the network, of priority data or a priority channel with at least one first data packet (310), and of other priority data or another priority channel with at least one second data packet (320),
b) at least one arbitration by at least one first network element of a transfer order into the first element to the output, between the first data packet and the second data packet, the transfer order being determined at least partially as a function of the priority channels with which the first packet and the second packet were associated.

3. Method for transmitting data according to claim 2, in which the first element is a first node (340) and in which the first data packet (310) and the second data packet (320) were associated respectively with, a first priority channel with given priority level, and a second priority channel with a priority level different from the priority level of the first channel, a first group of data in the first packet and another group of data in the second packet having accessed the first node and getting ready to access an output or the same output from the first node, and during step b), the transfer order between the first packet and the second packet being determined solely as a function of the priority level of the first channel and of the priority level of the second channel.

4. Method of transmitting data according to either claim 2 or 3, in which the first element is a first node (340) and in which the first data packet (310) and the second data packet (320) were associated respectively with a first priority channel, and with a second priority channel with a priority level lower than the first channel, a first group of data in the first packet and another group of data in the second packet having accessed the first node and getting ready to access an output or the same output in the first node, the method also including the following steps after step b):
c) transfer of the first data packet at the output from the first node,
d) transfer of the second data packet at the output from the first node, after the entire first packet has been transferred at the output from the first node.

5. Method of transmitting data according to claim 4, also including the following step after step b) and before step d):
- the second packet is at least partially stopped at the first node.

6. Method of transmitting data according to either claim 4 or 5, in which, before step b), the transfer of the second packet at the output from the first node has already begun, and at least a second data group in the second packet has already been transferred at the output from the first node and/or has already exited from the first node, while no data from the first data packet has yet been transferred to the output of the first node and/or has already been output from the first node, the method, also comprising the following step after step b) and before step d), and possibly during a partial stop of the second data packet transfer:
- stop said other data group of the second packet,
- displace or transfer said second data group of the second packet, into the network.

7. Method of transmitting data according to claims 4 to 6, in which, before step b), at least a third data group of the second packet (320) has not yet accessed the first node (340), also including the following step, after step b) and before step d), and possibly during a partial stop of the second data packet:
- transfer of at least part of the data in the third group of data in the second packet, to the input of the first node.

8. Method of transmitting data according to one of claims 5 to 7, in which, after step b) and before step d), at least a third data packet (330) associated with a channel with a higher priority level than the second channel accesses the first node and is getting ready to access said output from the first node, the method also including:
- transfer of the entire said third packet at the output from the first node (310), before step d).

9. Method of transmitting data according to claim 8, in which the third packet (330) is associated with a channel with priority level equal to the priority level of the first channel, said transfer of the entire said third packet at the output from the first node is made after step c) and before step d).

10. Method of transmitting data according to claim 8, in which the third packet is associated with a channel with a priority level higher than the priority level of the first channel, said transfer of the entire said third packet at the output from the first node is made prior to step c).

11. Method of transmitting data according to claim 2, in which in step a) the first element is a first node and in which the first data packet and the second data packet are associated with the same priority channel, the arbitration of the transfer order is also determined as a function of the order of arrival at the first node, the first packet and the second packet and/or as a function of the input of the input of the first node through which the first packet and the second packet accessed this first node.

12. Method of transmitting data according to claim 11, in which before step b), a first group of data in the first data packet (310) and another group of data in the second packet (320) have already accessed the first node and are getting ready to access an output or the same output of the first node, and in which in step b), a second data group in the second data packet has already been transferred to the output of the first node or has already been exited from the first node, also including after step b):
e) transfer of the second data packet at the output from the first node,
f) transfer of the first data packet at the output from the first node after the entire second packet has been transferred at the output from the first node.

13. Method of transmitting data according to either claim 11 or 12, in which at least one third data packet associated with a channel with a priority level higher than the channel with which the first packet and the second packet are associated, accesses the first node after step b) and before step e), and is getting ready to access said output of the first node, the method also comprising:
- transfer of the entire said third packet at the output from the first node, before step e).

14. Method of transmitting data according to claim 13, in which the third data packet accesses the first node before step a) or during step c), also including:
- transfer of the entire said third packet to the output of the first node, before step f).

15. Method of transmitting data according to one of the claims 2 to 14, in which the first packet and the second packet are intended to follow a first path in the network and a second path in the network respectively, the method also comprising before step b):
- determination of the first and second paths.

16. Method of transmitting data according to claim 15, also comprising the following step before step b):
- a network resource assigns data for the first path to the first packet (310), and another network resource assigns data for the second path to the second packet (320).

17. Method of transmitting data according to one of the claims 2 to 16, the first data packet (310) being associated with a priority channel, and the second data packet (320) being associated with a priority channel, as a function of the type of data included in said first and second packets.

18. Method of transferring data in a network on chip according to one of the claims 1 to 17, at least one element in the network being controlled by a first clock.

19. Method of transferring data in a network on chip according to claim 18, one or several other elements in the network being controlled by a second clock, different from the first clock or that is not synchronous with the first clock.

20. Method of transferring data in a network on chip according to one of the claims 1 to 19, one or several elements not being controlled by a clock or not being provided with a clock.

21. Network on chip device comprising a plurality of elements capable of communicating with each other, including a plurality of resources (110, 114a, 114b) capable of processing data, and one or several nodes (120, 400) provided with one or several inputs and one or several outputs, capable of switching data to at least two elements in the network comprising:
- means for sending data, capable of sending data in the form of packets associated with priority level or priority channel information and comprising one or several elementary data groups,
- means for receiving data, capable of receiving data in the form of packets comprising one or several elementary data groups,
- means for sending synchronization signals according to an asynchronous communication protocol, capable of sending at least one signal of a first type accompanying or associated with sending an elementary data group,
- means for reception of synchronization signals according to said asynchronous protocol, capable of receiving at least one signal of a second type, before reception of an elementary data group, also comprising:
- means for authorizing sending an elementary data group of a packet following reception of a synchronization signal of the second type, and of authorizing reception of an elementary data group of a packet following reception of a synchronization signal of the first type, said signal of the first type accompanying or associated with the sending of an elementary group of data in a packet at least partially comprising the priority level or priority channel information with which said packet is associated.

22. Network on chip device according to claim 21, also including:
- at least a first resource (110a) comprising priority association means capable of associating at least one priority channel chosen from among a predetermined set of priority channels with at least one data packet that this resource will send,
- at least one first element (124) also comprising: arbitration means, capable of determining a transfer order at the output from the first node between at least one first packet (310) associated with a priority channel and at least a second data packet associated with a priority channel, the transfer order being determined at least as a function of a corresponding priority channel or priority channels with which the first and the second (320) packets were associated by a corresponding resource in the network.

23. Network on chip device according to claim 22, in which said first element is a first node (124) in which the first packet and the second packet are associated with a first priority and a second priority channel different from the first channel, the arbitration means also being capable of determining the order of transfer between the first packet and the second packet solely as a function of the corresponding channels with which the first packet and the second packet are associated.

24. Network on chip device according to claim 22, in which the first element is a first node (124), the first packet and the second packet are associated with the same priority channel, the arbitration means also being capable of determining the order of transfer between the first packet and the second packet as a function of the order of arrival of the first and the second packets at the input to the first node.

25. Network on chip device according to claim 24, the arbitration means also being able to determine the order of transfer between the first packet and the second packet as a function of the input to the first node through which the first and the second packet arrived at the first node.

26. Network on chip device according to one of the claims 22 to 25, the first resource also comprising:
- means for assigning path data capable of assigning to at least one data packet that first resource (114a) is likely to send, data related to the path that this packet will follow in the network, to at least one data packet that the first resource will send.

27. Network on chip device according to claim 26, in which the first element is a first node (124) and in which the first data packet and the second data packet have each been associated with first path data and second path data, by a corresponding network resource, the first node also comprising:
- data routing means, capable of routing said first packet and said second packet, at least partially or totally depending on the path data with which the first packet and the second packet were associated by a network resource.

28. Network on chip device according to claim 27, the first node also comprising means for memorizing path data.

29. Network on chip device according to one of the claims 22 to 28, the means for associating the priority being capable of associating at least one priority channel chosen from among a predetermined set of priority channels as a function of the data type contained in this packet, with at least one data packet that this first resource will send.

30. Network on chip device according to one of the claims 21 to 29, in which at least one of said elements in the network is controlled by a first clock.

31. Network on chip device according to claim 30, at least one other element among said elements being controlled by a second clock, different from the first clock or not synchronous with the first clock.

32. Network on chip device according to one of the claims 21 to 31, at least one of said elements in the network not being controlled by a clock or not being provided with a clock.

## Patentansprüche

1. Verfahren zur Datenübertragung in einem On-Chip-Netzwerk, gebildet durch eine Vielzahl von Elementen, fähig untereinander zu kommunizieren, wobei die Vielzahl von Elementen eine Vielzahl Ressourcen (110, 114a, 114b), fähig Datenverarbeitungen durchzuführen, und eine Vielzahl Knoten (120, 400) umfasst, fähig Ressourcen miteinander zu verbinden und eine Verzweigung bzw. Weiterleitung der Daten in dem Netzwerk zu realisieren, wobei jeder Knoten mit einer Vielzahl Eingänge und einer Vielzahl Ausgänge versehen ist und das Verfahren dabei umfasst:
- mit Hilfe eines Asynchronkommunikationsprotokolls wenigstens einen Schritt zum Transfer - von einem Sendeelement (114a) des Netzwerks zu einem Empfangselement (114b) des Netzwerks - von wenigstens einem Datenpaket (310, 320, 330), verknüpft mit einer Information bezüglich der Priorität oder des Prioritätskanals aus einer Gruppe von mehreren verschiedenen Prioritätskanälen, eine oder mehrere Elementardatengruppen (312, 314, 316, 318, 322, 324, 326, 328, 332, 334, 336, 338) umfassend, wobei der Transfer von einer oder von mehreren Elementardatengruppen oder von allen Elementardatengruppen des genannten Pakets von einer Sendung wenigstens eines dem genannten Protokoll gemäßen Signals eines ersten Typs durch das erste Element begleitet wird und von dem zweiten Element, als Antwort auf das Signal des ersten Typs, durch eine Sendung von wenigstens einem dem genannten Protokoll gemäßen anderen Signal eines zweiten Typs genehmigt wird,
**dadurch gekennzeichnet, dass**
das genannte dem Asynchronkommunikationsprotokoll gemäße Signal des ersten Typs die genannte Prioritäts- oder Prioritätskanalinformation des genannten Pakets wenigstens partiell enthält.

2. Verfahren zur Datenübertragung in einem On-Chip-Netzwerk nach Anspruch 1, wobei das Verfahren außerdem umfasst:
a) Verknüpfung - durch eine jeweilige Ressource des Netzwerks - von Daten bezüglich der Priorität oder eines Prioritätskanals mit wenigstens einem ersten Datenpaket (310), von anderen Daten bezüglich der Priorität oder eines anderen Prioritätskanals mit wenigstens einem zweiten Datenpaket (320),
b) wenigstens eine Arbitrierung - durch wenigstens ein erstes Element des Netzwerks - einer Transferreihenfolge zum Ausgang des ersten Elements zwischen dem ersten Datenpaket und dem zweiten Datenpaket, wobei die Transferreihenfolge wenigstens partiell in Abhängigkeit von dem jeweiligen Prioritätskanal bestimmt wird, mit dem das erste Paket und das zweite Paket verknüpft worden sind.

3. Datenübertragungsverfahren nach Anspruch 2, bei dem das erste Element ein erster Knoten (340) ist und bei dem das erste Datenpaket (310) und das zweite Datenpaket jeweils mit einem ersten Prioritätskanal von bestimmter Priorität und mit einem zweiten Prioritätskanal mit einem von dem des ersten Prioritätskanals unterschiedlichen Prioritätspegel verknüpft worden sind, wobei eine erste Datengruppe des ersten Datenpakets und eine andere Datengruppe des zweiten Pakets den ersten Knoten erreicht haben und sich anschicken, zu einem Ausgang oder zu einem selben Ausgang des ersten Knotens zu gelangen, und während des Schritts b) die Transferreihenfolge zwischen dem ersten Paket und dem zweiten Paket nur in Abhängigkeit von dem jeweiligen Prioritätspegel des ersten Kanals und des zweiten Kanals bestimmt wird.

4. Datenübertragungsverfahren nach Anspruch 2 oder 3, in dem das erste Element ein erster Knoten (340) ist und in dem das erste Datenpaket (310) und das zweite Datenpaket (320) jeweils mit einem ersten Prioritätskanal und einem zweiten Prioritätskanal eines niedrigeren Prioritätspegels als dem des ersten Prioritätskanals verknüpft worden sind, wobei eine erste Datengruppe des ersten Pakets und eine andere Datengruppe des zweiten Pakets den ersten Knoten erreicht haben und sich anschicken, zu einem Ausgang oder zu einem selben Ausgang des ersten Knotens zu gelangen, und das Verfahren außerdem nach dem Schritt b) umfasst:
c) den Transfer des ersten Datenpakets zum Ausgang des ersten Knotens,
d) den Transfer des zweiten Datenpakets zum Ausgang des ersten Knotens, nachdem am Ausgang des ersten Knotens die Gesamtheit des ersten Pakets transferiert worden ist.

5. Datenübertragungsverfahren nach Anspruch 4, außerdem nach Schritt b) und vor Schritt d) umfassend:
- den wenigstens partiellen Stopp des zweiten Pakets in Höhe des ersten Knotens.

6. Datenübertragungsverfahren nach Anspruch 4 oder 5, in dem der Transfer des zweiten Pakets zum Ausgang des ersten Knotens schon vor dem Schritt b) begonnen hat und wenigstens eine zweite Datengruppe des zweiten Pakets schon zum Ausgang des ersten Knotens transferiert worden ist und/oder den ersten Knoten schon verlassen hat, während noch kein Datenelement des ersten Datenpakets zum Ausgang des ersten Knotens transferiert worden ist und/oder den ersten Knoten schon verlassen hat, außerdem nach dem Schritt b) und vor dem Schritt d) und eventuell während eines partiellen Stopps des zweiten Datenpakets umfassend:
- den Stopp der genannten anderen Datengruppe des zweiten Pakets,
- die Verschiebung oder den Transfer der genannten zweiten Datengruppe des zweiten Pakets.

7. Datenübertragungsverfahren nach einem der Ansprüche 4 bis 6, in dem vor dem Schritt b) eine dritte Datengruppe des zweiten Pakets (320) den ersten Knoten (340) noch nicht erreicht hat, außerdem nach dem Schritt b) und vor dem Schritt d) umfassend:
- den Transfer von wenigstens einem Teil der Daten der dritten Datengruppe des zweiten Pakets zum Eingang des ersten Knotens.

8. Datenübertragungsverfahren nach einem der Ansprüche 5 bis 7, in dem nach dem Schritt b) und vor dem Schritt d) wenigstens ein drittes Datenpaket (330), verknüpft mit einem Kanal höherer Priorität als der des zweiten Kanals, den ersten Knoten erreicht und sich anschickt, zu dem genannten Ausgang des ersten Knotens zu gelangen und das Verfahren dabei außerdem umfasst:
- vor dem Schritt d) den Transfer der Gesamtheit des dritten Pakets zum Ausgang des ersten Knotens (310).

9. Datenübertragungsverfahren nach Anspruch 8, in dem das dritte Paket (330) mit einem Kanal gleicher Priorität wie der des ersten Kanals verknüpft ist, wobei der genannte Transfer der Gesamtheit des dritten Pakets zum Ausgang des ersten Knotens nach dem Schritt c) und vor dem Schritt d) realisiert wird.

10. Datenübertragungsverfahren nach Anspruch 8, in dem das dritte Paket (330) mit einem Kanal höherer Priorität als der des ersten Kanals verknüpft ist, wobei der genannte Transfer der Gesamtheit des dritten Pakets vor dem Schritt c) realisiert wird.

11. Datenübertragungsverfahren nach Anspruch 2, in dem in Schritt a) das erste Element ein erster Knoten ist, und in dem das erste Datenpaket und das zweite Datenpaket jeweils mit einem selben Prioritätskanal verknüpft sind, wobei die Arbitrierung der Transferreihenfolge außerdem bestimmt wird in Abhängigkeit von der Reihenfolge der jeweiligen Ankunft - beim ersten Knoten - des ersten Pakets und des zweiten Pakets und/oder in Abhängigkeit von dem Eingang des ersten Knotens, durch den das erste Paket und das zweite Paket jeweils in diesen ersten Knoten gelangt sind.

12. Datenübertragungsverfahren nach Anspruch 11, in dem vor dem Schritt b) eine erste Datengruppe des ersten Datenpakets (310) und eine andere Datengruppe des zweiten Pakets (320) den ersten Knoten schon erreicht haben und sich anschicken zu einem Ausgang oder einem selben Ausgang des ersten Knotens zu gelangen, und in dem in Schritt b) eine zweite Datengruppe des zweiten Datenpakets schon zum Ausgang des ersten Knotens transferiert worden ist oder den ersten Knoten schon verlassen hat,
außerdem nach Schritt b) umfassend:
e) den Transfer des zweiten Datenpakets zum Ausgang des ersten Knotens,
f) den Transfer des ersten Datenpakets zum Ausgang des ersten Knotens nachdem die Gesamtheit des zweiten Pakets zum Ausgang des ersten Knotens transferiert worden ist.

13. Datenübertragungsverfahren nach einem der Ansprüche 11 oder 12, in dem wenigstens ein drittes Datenpaket - verknüpft mit einem Kanal eines höheren Prioritätspegels als dem Prioritätspegel des Kanals, mit dem sowohl das erste Paket als auch das zweite Paket verknüpft sind -, den ersten Knoten nach dem Schritt b) und vor dem Schritt e) erreicht und sich anschickt, zu dem genannten Ausgang des ersten Knotens zu gelangen,
außerdem umfassend:
- vor dem Schritt e) den Transfer der Gesamtheit des genannten dritten Pakets zum Ausgang des ersten Knotens.

14. Datenübertragungsverfahren nach Anspruch 13, in dem das dritte Datenpaket den ersten Knoten vor dem Schritt a) oder während des Schritts c) erreicht, außerdem umfassend:
- vor dem Schritt f) den Transfer der Gesamtheit des genannten dritten Pakets zum Ausgang des ersten Knotens.

15. Datenübertragungsverfahren nach einem der Ansprüche 2 bis 14, in dem das erste Paket und das zweite Paket dazu bestimmt sind, in dem Netzwerk einen ersten Weg beziehungsweise einen zweiten Weg zu benutzen, wobei das Verfahren vor dem Schritt b) umfasst:
- die Bestimmung des ersten Wegs und des zweiten Wegs.

16. Datenübertragungsverfahren nach Anspruch 15, außerdem vor Schritt b) umfassend:
- Zuordnung von den ersten Weg betreffenden Daten zum Paket (310) und von den zweiten Weg betreffenden Daten zum Paket (320) durch eine jeweilige Ressource des Netzwerks.

17. Datenübertragungsverfahren nach einem der Ansprüche 2 bis 16, wobei die Verknüpfung des ersten Datenpakets (310) mit einem Prioritätskanal und des zweiten Datenpakets (320) mit einem Prioritätskanal in Abhängigkeit von dem (den) Typ(en) der Daten erfolgt, die das genannte erste Paket und das genannte zweite Paket jeweils enthalten.

18. Verfahren zur Datenübertragung in einem On-Chip-Netzwerk nach einem der Ansprüche 1 bis 17, wobei wenigstens ein Element des Netzwerks durch einen ersten Takt gesteuert wird.

19. Verfahren zur Datenübertragung in einem On-Chip-Netzwerk nach Anspruch 18, wobei ein oder mehrere andere Elemente des Netzwerks jeweils durch einen Takt gesteuert werden, der anders ist als der erste Takt oder nicht synchron ist zum ersten Takt.

20. Verfahren zur Datenübertragung in einem On-Chip-Netzwerk nach einem der Ansprüche 1 bis 19, wobei ein oder mehrere Elemente nicht durch einen Takt gesteuert werden oder keinen Takt haben.

21. On-Chip-Netzwerkvorrichtung mit einer Vielzahl von Elementen, fähig untereinander zu kommunizieren, darunter eine Vielzahl von Ressourcen (110, 114a), fähig Datenverarbeitungen durchzuführen, und einen oder mehrere Knoten (120, 400) mit einem oder mehreren Eingängen und einem oder mehreren Ausgängen, fähig eine Verzweigung bzw. Weiterleitung von Daten zu realisieren, wobei wenigstens zwei Elemente des On-Chip-Netzwerks umfassen:
- Datensendeeinrichtungen, fähig Daten in Form von Paketen zu senden, die jeweils mit einer Prioritätspegel- oder Prioritätskanal-Information verknüpft sind und eine oder mehrere Elementardatengruppen umfassen,
- Datenempfangseinrichtungen, fähig Daten in Form von Paketen zu empfangen, die jeweils eine oder mehrere Elementardatengruppen umfassen,
- Sendeeinrichtungen von Synchronisationssignalen entsprechend einem Asynchronkommunikationsprotokoll, fähig wenigstens ein Signal eines ersten Typs zu senden, das eine Sendung einer Elementardatengruppe begleitet oder mit einer Sendung einer Elementardatengruppe verknüpft ist,
- Empfangseinrichtungen von Synchronisationssignalen entsprechend dem Asynchronkommunikationsprotokoll, fähig wenigstens ein Signal eines zweiten Typs zu empfangen, vor einem Empfang einer Elementardatengruppe,
wobei die Vorrichtung außerdem umfasst:
- Einrichtungen zur Genehmigung der Sendung einer Elementardatengruppe eines Pakets nach dem Empfang eines Signals des zweiten Typs und zur Genehmigung des Empfangs einer Elementardatengruppe eines Pakets nach dem Empfang eines Signals des ersten Typs,
**dadurch gekennzeichnet, dass** das eine Sendung einer Elementardatengruppe eines Pakets begleitende oder mit ihr verknüpfte Signal des ersten Typs wenigstens partiell die Prioritätspegel- oder Prioritätskanal-Information enthält, mit der das genannte Paket verknüpft ist.

22. On-Chip-Netzwerkvorrichtung nach Anspruch 21, außerdem umfassend:
- wenigstens eine erste Ressource (110a) mit Prioritätszuordnungseinrichtungen, fähig wenigstens ein durch diese Ressource gesendetes Datenpaket mit wenigstens einem aus einer vorherbestimmten Gruppe von Prioritätskanälen ausgewählten Prioritätskanal zu verknüpfen,
- wenigstens ein erstes Element (124), das außerdem umfasst: Arbitrierungseinrichtungen, fähig zur Bestimmung einer Transferreihenfolge zum Ausgang des ersten Elements zwischen wenigstens einem ersten Paket (310), verknüpft mit einem Prioritätskanal, und wenigstens einem zweiten Paket, verknüpft mit einem Prioritätskanal,
wobei die Transferreihenfolge jeweils wenigstens in Abhängigkeit von einem Prioritätskanal oder von Prioritätskanälen bestimmt wird, mit dem/denen das erste Paket und das zweite Paket (320) durch eine jeweilige Ressource des Netzwerks verknüpft worden sind.

23. On-Chip-Netzwerkvorrichtung nach Anspruch 22, bei der das erste Element ein erster Knoten (124) ist, in dem das erste Paket und das zweite Paket jeweils mit einem ersten Prioritätskanal und mit einem zweiten Prioritätskanal verknüpft werden, der von anderer Priorität als der erste Kanal ist, wobei die Arbitrierungseinrichtungen außerdem fähig sind, die Transferreihenfolge zwischen dem ersten Paket und dem zweiten Paket nur in Abhängigkeit von den beiden jeweiligen Kanälen zu bestimmen, mit denen das erste Paket und das zweite Paket jeweils verknüpft sind.

24. On-Chip-Netzwerkvorrichtung nach Anspruch 22, bei der das erste Element ein erster Knoten (124) ist, in dem das erste Paket und das zweite Paket mit einem selben Prioritätskanal verknüpft werden, wobei die Arbitrierungseinrichtungen außerdem fähig sind, die Transferreihenfolge zwischen dem ersten Paket und dem zweiten Paket in Abhängigkeit von der jeweiligen Ankunftsreihenfolge am Eingang des ersten Knotens zu bestimmen, in der das erste und das zweite Paket den ersten Knoten erreicht haben.

25. On-Chip-Netzwerkvorrichtung nach Anspruch 24, bei der die Arbitrierungseinrichtungen außerdem fähig sind, die Transferreihenfolge zwischen dem ersten Paket und dem zweiten Paket in Abhängigkeit von dem jeweiligen Eingang des ersten Knotens zu bestimmen, durch den das erste Paket und das zweite Paket in den ersten Knoten gelangt sind.

26. On-Chip-Netzwerkvorrichtung nach einem der Ansprüche 22 bis 25, wobei die erste Ressource außerdem umfasst:
- Wegdaten-Zuordnungseinrichtungen, fähig wenigstens einem Datenpaket, das die erste Ressource (114a) sendet, Daten bezüglich des Wegs zuzuteilen, den dieses Paket in dem Netzwerk benutzt.

27. On-Chip-Netzwerkvorrichtung nach Anspruch 26, bei der das erste Element ein erster Knoten (124) ist und bei der das erste Datenpaket und das zweite Datenpaket durch eine jeweilige Ressource des Netzwerks jeweils mit ersten Wegdaten und mit zweiten Wegdaten verknüpft worden sind, wobei der erste Knoten außerdem umfasst:
- Datenroutingeinrichtungen, fähig ein Routing des genannten ersten Pakets und des genannten zweiten Pakets wenigstens partiell oder total in Abhängigkeit von jeweiligen Wegdaten durchzuführen, mit denen das erste Paket und das zweite Paket jeweils durch eine Ressource des Netzwerks verknüpft worden sind.

28. On-Chip-Netzwerkvorrichtung nach Anspruch 27, wobei der erste Knoten außerdem umfasst: Wegdatenspeicherungseinrichtungen.

29. On-Chip-Netzwerkvorrichtung nach einem der Ansprüche 22 bis 28, wobei die Prioritätszuordnungseinrichtungen fähig sind, mit wenigstens einem Datenpaket, das diese erste Ressource sendet, wenigstens einen Prioritätskanal zu verknüpfen, ausgewählt aus einer vorbestimmten Gruppe von Prioritätskanälen in Abhängigkeit vom Typ der Daten, die dieses Paket enthält.

30. On-Chip-Netzwerkvorrichtung nach einem der Ansprüche 21 bis 29, bei dem wenigstens eines der genannten Elemente des Netzwerks durch einen ersten Takt gesteuert wird.

31. On-Chip-Netzwerkvorrichtung nach Anspruch 30, bei dem wenigstens ein anderes Element unter den genannten Elementen durch einen zweiten Takt gesteuert wird, der anders ist als der erste Takt oder nicht synchron ist zum ersten Takt.

32. On-Chip-Netzwerkvorrichtung nach einem der Ansprüche 21 bis 31, bei dem wenigstens eines der genannten Netzwerkelemente nicht durch einen Takt gesteuert wird oder keinen Takt hat.
